# EUROPEAN PATENT APPLICATION

(11) **EP 4 488 902 A1**
(43) Date of publication of application: **08.01.2025**
(21) Application number: 22929601.7
(22) Date of filing: 22.11.2022
(51) Int. Cl.: G06Q 10/08, B07C 3/02

(54) **PICKING AND DISTRIBUTION SYSTEM AND CONTROL METHOD THEREOF**

(30) Priority: 04.03.2022 CN 202210211671; 02.04.2022 CN 202210342466; 02.04.2022 CN 202220769869 U
(71) Applicant: Beijing Geekplus Technology Co. Ltd, Beijing 100102 (CN)
(72) Inventor: ZHANG, Qian, Beijing 100102 (CN); YE, Chanjun, Beijing 100102 (CN)
(74) Representative: Manna, Sara
(86) International application number: PCT/CN2022/133566
(87) International publication number: WO 2023/165173

(57) **Abstract**

A picking and distribution system, comprising a carrier parking region (102), a distribution mechanism (3), and a control server. The carrier parking region is configured to be used for parking a carrier, and the carrier is used for storing order containers; the distribution mechanism is provided at the carrier parking region, and is configured to receive at least one item contained in a same order, drive the item to move from a docking position to an order container corresponding to the order, distribute the item to the order container, and return to the docking position; the control server is communicatively connected to the distribution mechanism, and is configured to obtain position information of the order container on the basis of the order information of the order and send the position information to the distribution mechanism. Compared with existing totally manually operated picking and distribution tasks, the system automatically completes distribution tasks by using the distribution mechanism, so that the picking and distribution operation efficiency is improved, and the operation error rate is reduced. The present invention further relates to a control method of the picking and distribution system.

## Description

### CROSS-REFERENCE TO RELATED APPLICATION

The present disclosure claims priority to and benefits of Chinese Patent Application No. 202210211671.7, filed with the National Intellectual Property Administration of P. R. China on March 4, 2022, titled "picking and allocating system and method for controlling the same", Chinese Patent Application No. 202210342466.4, filed with the National Intellectual Property Administration of P. R. China on April 2, 2022, titled "sorting system and method for controlling the same", and Chinese Utility Model Application No. 202220769869.2, filed with the National Intellectual Property Administration of P. R. China on April 2, 2022, titled "sorting system", the entire contents of which are incorporated herein by reference.

### FIELD

The present disclosure relates to technical field of warehousing systems, and more particularly to a picking and allocating system and a method for controlling the same.

### BACKGROUND

Currently, order picking and allocating operations are completely done manually. Specifically, an operator first places an empty receptacle representing an order on an order receptacle rack in a workstation, then picks a stock from a storage receptacle, scans the stock to obtain stock information, and delivers the stock to a designated order receptacle according to a system prompt. The order receptacle is placed on the rack. When the order receptacle is full or the order is completed, the operator replaces the order receptacle, and starts a next order sorting operation.

Manual order picking and allocating operations have low picking and allocating efficiency and poor accuracy.

### SUMMARY

In order to solve the technical problems of low picking and allocating efficiency and poor accuracy in manual order picking and allocating operations, in an aspect of the present disclosure, there is provided a picking and allocating system.

In order to solve the technical problems of low picking and allocating efficiency and poor accuracy in manual order picking and allocating operations, in an aspect of the present disclosure, there is provided a picking and allocating system.

The picking and allocating system includes: a holder parking area, configured for parking a holder, the holder being configured for storing order receptacles; an allocating mechanism, arranged in the holder parking area, and configured to: receive at least one stock listed in a same order, bring the at least one stock to move from a docking position to an order receptacle corresponding to the order, allocate the at least one stock to the order receptacle, and return to the docking position; and a control server, communicatively connected with the allocating mechanism, and configured to: obtain position information of the order receptacle according to the order, and send the position information to the allocating mechanism.

In an embodiment of the picking and allocating system of the present disclosure, the control server is further configured to send a picking instruction, the picking instruction includes picking out a total number of same stocks listed in a plurality of orders, and placing the stocks of the plurality of orders on the allocating mechanism in batches, respectively, to allow the allocating mechanism to implement delivery until all of the plurality of orders are completed.

In an embodiment of the picking and allocating system of the present disclosure, the control server is further configured to send a picking instruction, the picking instruction includes picking out all stocks included in an order and placing all the stocks on the allocating mechanism; and all the stocks are of a same type or of different types.

In an embodiment of the picking and allocating system of the present disclosure, the picking and allocating system further includes: a picking workstation area; and a picking equipment, configured to: receive a stock in the picking workstation area and identify stock information of the stock, move to a docking position of a corresponding allocating mechanism according to the stock information, and place the stock on the corresponding allocating mechanism. The control server is communicatively connected with the picking equipment, and further configured to send the docking position of the corresponding allocating mechanism to the picking equipment according to the stock information.

In an embodiment of the picking and allocating system of the present disclosure, the holder includes at least two layers of storage space extending in a height direction, each layer of storage space has at least one storage location, and each storage location is configured to store a receptacle.

In an embodiment of the picking and allocating system of the present disclosure, the allocating mechanism is further configured to: take out a target stock from the order receptacle and deliver the target stock to the picking equipment; and the picking equipment is further configured to: transport the target stock from the holder storage area to the picking workstation area, and deliver the target stock to a target storage location corresponding to the target stock.

In an embodiment of the picking and allocating system of the present disclosure, a bearing surface of the picking equipment and a bearing surface of the allocating mechanism are docked through an inclined slideway, and the inclined slideway is configured to let the target stock slide from the bearing surface of the picking equipment to the bearing surface of the allocating mechanism under gravity.

In an embodiment of the picking and allocating system of the present disclosure, the picking equipment has a first pick-and-place component, the first pick-and-place component includes a bearing member and a rotating member rotatably arranged on the bearing member, and the rotating member has a first position and a second position. At the first position, the bearing member bears the rotating member, and a bearing surface of the rotating member extends in a horizontal direction. At the second position, the bearing surface of the rotating member is inclined at a preset angle relative to the horizontal direction to form an inclined slideway.

In an embodiment of the picking and allocating system of the present disclosure, a bearing surface of the picking equipment and a bearing surface of the allocating mechanism are docked by a conveyor, and the conveyor is configured to transport a target stock from the bearing surface of the picking equipment to the bearing surface of the allocating mechanism.

In an embodiment of the picking and allocating system of the present disclosure, both sides of the conveyor are provided with protective baffles extending along a conveying direction.

In an embodiment of the picking and allocating system of the present disclosure, the picking equipment further includes a first movement component, the first pick-and-place component is arranged on the first movement component, and the first movement component is configured to bring the first pick-and-place component to move.

In an embodiment of the picking and allocating system of the present disclosure, the allocating mechanism includes: a second pick-and-place component, having a bearing surface and configured to: deliver a target stock from the bearing surface into the order receptacle, or deliver the target stock from the bearing surface to a bearing surface of the picking equipment; and a second movement component, the second pick-and-place component being arranged on the second movement component, and the second movement component is configured to bring the second pick-and-place component to move between a docking position for docking with the picking equipment and the order receptacle.

In an embodiment of the picking and allocating system of the present disclosure, the second movement component includes: a horizontal slide rail; and a vertical slide rail, arranged on the horizontal slide rail and configured to slide along the horizontal slide rail. The second pick-and-place component is arranged on the vertical slide rail and configured to slide along the vertical slide rail.

In an embodiment of the picking and allocating system of the present disclosure, the allocating mechanism includes a plurality of second pick-and-place components arranged at intervals in a height direction.

In an embodiment of the picking and allocating system of the present disclosure, the picking and allocating system further includes a main passage configured to connect the picking workstation area and the holder storage area, the main passage is evenly divided into a plurality of square grids with corresponding position information set in each square grid; and the picking equipment determines a destination based on the position information.

In an embodiment of the picking and allocating system of the present disclosure, picking workstation areas are arranged at both ends of the main passage, and the two picking workstation areas are configured to perform the same work or different works.

In an embodiment of the picking and allocating system of the present disclosure, holder storage areas are arranged at both sides of the main passage.

In an embodiment of the picking and allocating system of the present disclosure, in the holder storage area, a plurality of holders are arranged at intervals in an extension direction of the main passage, and an area between two adjacent holders is recorded as a lane, and the allocating mechanism is arranged in the lane.

In an embodiment of the picking and allocating system of the present disclosure, the picking equipment is further configured to: put target stocks into target receptacles on two adjacent holders, or take out target stocks from target receptacles on two adjacent holders.

In an embodiment of the picking and allocating system of the present disclosure, the picking and allocating system further includes: an identification device, configured to recognize identity information of a target stock. The control server is communicatively connected with the identification device, and determines a target receptacle or a target storage location corresponding to the target stock according to the identity information of the target stock.

In an embodiment of the picking and allocating system of the present disclosure, the picking and allocating system further includes: a receptacle storage area, configured to store inventory receptacles for storing stocks to be sorted; a picking workstation area; a receptacle handling equipment, configured to transport an inventory receptacle from the receptacle storage area to the picking workstation area; and a stock pick-and-place equipment, arranged between the picking workstation area and the holder parking area, and configured to: take out a stock in the inventory receptacle and place the stock on the allocating mechanism, and identify stock information of the stock. The control server is also communicatively connected with both the receptacle handling equipment and the stock pick-and-place equipment, and is further configured to obtain position information of an order receptacle according to the stock information and order information corresponding to the stock information.

In an embodiment of the picking and allocating system of the present disclosure, the receptacle handling equipment is configured to: transport one or more inventory receptacles required for a plurality of orders from the receptacle storage area to the picking workstation area according to order information of the plurality of orders, or transport one or more inventory receptacles from the picking workstation area to the receptacle storage area after sorting is completed.

In an embodiment of the picking and allocating system of the present disclosure, the picking and allocating system further includes: a receptacle storage area, configured to store inventory receptacles for storing stocks to be sorted; a picking workstation area; a receptacle handling equipment, configured to transport an inventory receptacle from the receptacle storage area to the picking workstation area; and an identification device configured to identify stock information of a stock in the inventory receptacle. The control server is also communicatively connected with both the receptacle handling equipment and the identification device, and further configured to obtain position information of an order receptacle according to the stock information and order information corresponding to the stock information.

In an embodiment of the picking and allocating system of the present disclosure, the receptacle handling equipment is configured to: transport one or more inventory receptacles required for a plurality of orders from the receptacle storage area to the picking workstation area according to order information of the plurality of orders, or transport one or more inventory receptacles from the picking workstation area to the receptacle storage area after sorting is completed.

In an embodiment of the picking and allocating system of the present disclosure, the picking and allocating system further includes: a picking workstation area; and a stock pick-and-place equipment, arranged between the picking workstation area and the holder parking area, and configured to: take out a stock listed in an order from the picking workstation area and place the stock on the allocating mechanism, and identify stock information of the stock. The control server is also communicatively connected with the stock pick-and-place equipment, and further configured to obtain position information of an order receptacle according to the stock information and order information corresponding to the stock information.

In an embodiment of the picking and allocating system of the present disclosure, the picking and allocating system further includes: a picking workstation area; a stock storage area, configured to store stocks to be sorted; a stock handling equipment, configured to move to a storage position of a stock listed in an order in the stock storage area according to order information, receive the stock, and transport the stock to the picking workstation area; and an identification device, configured to identify stock information of the stock. The control server is also communicatively connected with both the stock handling equipment and the identification device, and further configured to obtain position information of an order receptacle according to the stock information and order information corresponding to the stock information.

In an embodiment of the picking and allocating system of the present disclosure, the stock handling equipment includes: a handling vehicle; a bracket, arranged on the handling vehicle, and the handling vehicle being configured to bring the bracket to move between a stock inventory area and the picking workstation area; and at least one tray, arranged on the bracket, and configured to bear stocks.

In an embodiment of the picking and allocating system of the present disclosure, the picking and allocating system further includes: a handling base, configured to support holders or order receptacles, and having space for a handling vehicle to enter from the ground; and a handling vehicle, configured to: lift the handling base carrying a holder or an order receptacle off the ground after allocation is completed and transport the handling base from the holder parking area to a workstation area downstream, or transport the handling base carrying an empty holder or order receptacle from an inventory area to the holder parking area.

In an embodiment of the picking and allocating system of the present disclosure, the control server is communicatively connected with the handling vehicle, and configured to: control the handling vehicle to transport the handling base carrying the empty holder or order receptacle to the holder parking area when receiving an order, or control the handling vehicle to transport the handling base carrying the holder or the order receptacle for which allocation is completed to the workstation area downstream after an order is completed.

In an embodiment of the picking and allocating system of the present disclosure, the allocating mechanism includes: a gantry, arranged in the holder parking area; and a movement component, provided with a docking component, and configured to bring the docking component to move between the docking position and the order receptacle. The docking component is configured to receive a stock or place a stock into the order receptacle.

In an embodiment of the picking and allocating system of the present disclosure, the movement component includes: a horizontal slide rail, arranged on the gantry, and configured to bring the docking component to move in a horizontal direction relative to the gantry; and/or a vertical slide rail, arranged on the gantry, and configured to bring the docking component to move in a vertical direction relative to the gantry.

In an embodiment of the picking and allocating system of the present disclosure, the horizontal slide rail includes: a horizontal linear rail, arranged on the gantry and extending in the horizontal direction; a horizontal sliding block, slidably connected to the horizontal linear rail; and a horizontal driving element, configured to drive the horizontal sliding block to slide on the horizontal linear rail in the horizontal direction.

In an embodiment of the picking and allocating system of the present disclosure, the vertical slide rail includes: a vertical linear rail, arranged on the horizontal sliding block and extending in the vertical direction; a vertical sliding block, slidably connected to the vertical linear rail; and a vertical driving element, configured to drive the vertical sliding block to slide on the vertical linear rail in a preset direction. The docking component is arranged on the vertical sliding block.

In an embodiment of the picking and allocating system of the present disclosure, the movement component includes an upper horizontal slide rail and a lower horizontal slide rail arranged in parallel, an upper end of the vertical linear rail is arranged on a horizontal sliding block of the upper horizontal slide rail, and a lower end of the vertical linear rail is arranged on a horizontal sliding block of the lower horizontal slide rail.

In an embodiment of the picking and allocating system of the present disclosure, the docking component includes: a bracket, arranged on the movement component, and configured to reciprocate between the docking position and the order receptacle with the movement component; a conveying belt, rotatably arranged on the bracket; and a conveying drive element, configured to drive the conveying belt to rotate relative to the bracket to bring a stock to a middle part of the conveying belt or allocate a tock on the conveying belt into the order receptacle.

In another aspect of the present disclosure, there is provided a method for controlling a picking and allocating system. The picking and allocating system includes: a holder parking area; an allocating mechanism, arranged in the holder parking area; and a control server, communicatively connected with the allocating mechanism. The method includes the following steps. The control server receives an order, and sends position information of an order receptacle on a holder corresponding to the order to the allocating mechanism. The allocating mechanism receives at least one stock listed in the order at a docking position, brings the at least one stock to move from the docking position to the order receptacle and delivers the at least one stock to the order receptacle, and returns to the docking position.

In an embodiment of the method for controlling the picking and allocating system of the present disclosure, the picking and allocating system further includes a picking workstation area and a picking equipment; and the control server is communicatively connected with the picking equipment. Before the step of the allocating mechanism receiving the at least one stock listed in the order at the docking position, bringing the at least one stock to move from the docking position to the order receptacle and delivering the at least one stock to the order receptacle, and returning to the docking position, the method further includes the following steps. The picking equipment receives the at least one stock at the picking workstation area and identifies stock information of the at least one stock. The control server sends a docking position of a corresponding allocating mechanism to the picking equipment according to the stock information. The picking equipment carries the at least one stock to move to the docking position of the allocating mechanism, and places the at least one stock on the allocating mechanism.

In an embodiment of the method for controlling the picking and allocating system of the present disclosure, the method further includes the following steps. The allocating mechanism takes out a target stock from the holder and delivers the target stock onto the picking equipment. The picking equipment transports the target stock to a target storage location in the picking workstation area, and delivers the target stock to the target storage location.

In an embodiment of the method for controlling the picking and allocating system of the present disclosure, the picking and allocating system further includes a receptacle storage area, a picking workstation area, a receptacle handling equipment, and a stock pick-and-place equipment. The stock pick-and-place equipment is arranged between the picking workstation area and the holder parking area, and the control server is also communicatively connected with both the receptacle handling equipment and the stock pick-and-place equipment. Before the step of the allocating mechanism receiving the at least one stock listed in the order at the docking position, bringing the at least one stock to move from the docking position to the order receptacle and delivering the at least one stock to the order receptacle, and returning to the docking position, the method further includes the following step. In the receptacle storage area, the receptacle handling equipment receives an inventory receptacle corresponding to the order, and transports the inventory receptacle from the receptacle storage area to the picking workstation area. The stock pick-and-place equipment identifies stock information of a stock in the inventory receptacle, takes out the stock from the inventory receptacle and places the stock on the allocating mechanism.

The picking and allocating system of the present disclosure includes: a holder parking area, an allocating mechanism and a control server. The holder parking area is configured for parking a holder, and the holder is configured for storing order receptacles. The allocating mechanism is arranged in the holder parking area, and configured to: receive at least one stock listed in a same order, bring the at least one stock to move from a docking position to an order receptacle corresponding to the order, allocate the at least one stock to the order receptacle, and return to the docking position. The control server is communicatively connected with the allocating mechanism, and configured to: obtain position information of the order receptacle according to order information of the order, and send the position information to the allocating mechanism.

The working process of the picking and allocating system of the present disclosure is as follows

The control server receives an order sent by a user or a superior system. The allocating mechanism receives at least one stock listed in the order at a docking position, brings the at least one stock to move from the docking position to an order receptacle corresponding to the order, delivers the at least one stock to the order receptacle, and returns to the docking location to wait for a next allocating task.

It can be seen that compared with the existing picking and allocating tasks operated manually completely, the picking and allocating system of the present disclosure automatically completes the allocating task by using the allocating mechanism, which improves the efficiency of the picking and allocating operations and reduces the operation error rate.

In order to make the above-mentioned objects, features and advantages of the present disclosure more understandable, preferred embodiments are given below and described in detail with reference to the accompanying drawings.

### BRIEF DESCRIPTION OF THE DRAWINGS

In order to explain the technical solutions according to embodiments of the present disclosure more clearly, drawings to be used in the description of the embodiments will be briefly introduced below. The drawings here are incorporated into the specification and constitute a part of the specification. These drawings illustrate embodiments consistent with the present disclosure and, together with the specification, serve to explain the technical solutions of the present disclosure. It should be understood that the following drawings only illustrate certain embodiments of the present disclosure, and therefore shall not be construed to limit the scope of the present disclosure. For those of ordinary skill in the art, other relevant drawings can be obtained based on these drawings without creative efforts.
FIG 1 is a schematic block diagram showing a working principle of picking and allocating tasks;
FIG 2 is a schematic block diagram of a picking and allocating system according to a first embodiment of the present disclosure;
FIG 3 is a schematic stereogram of an allocating mechanism according to an embodiment of the present disclosure;
FIG 4 is a schematic front view of an allocating mechanism according to an embodiment of the present disclosure;
FIG 5 is a schematic side view of an allocating mechanism according to an embodiment of the present disclosure;
FIG 6 is a schematic top view of an allocating mechanism according to an embodiment of the present disclosure;
FIG 7 is a schematic block diagram of a picking and allocating system according to a second embodiment of the present disclosure;
FIG 8 is a schematic block diagram of a picking and allocating system according to a third embodiment of the present disclosure;
FIG 9 is a schematic block diagram of a picking and allocating system according to a fourth embodiment of the present disclosure;
FIG 10 is a schematic planar diagram of a picking and allocating system according to a fifth embodiment of the present disclosure;
FIG 11 is a partial stereogram of the embodiment shown in FIG 10;
FIG 12 is a partial stereogram of the embodiment shown in FIG 10;
FIG 13 is a schematic flowchart of a method for controlling a picking and allocating system according to Embodiment 1 of the present disclosure;
FIG 14 is a schematic flowchart of a method for controlling a picking and allocating system according to Embodiment 2 of the present disclosure;
FIG 15 is a schematic flowchart of a method for controlling a picking and allocating system according to Embodiment 3 of the present disclosure;
FIG 16 is a schematic flowchart of main control steps of a method for controlling a picking and allocating system according to Embodiment 4 of the present disclosure; and
FIG 17 is a schematic flowchart of main control steps of a method for controlling a picking and allocating system according to Embodiment 5 of the present disclosure.

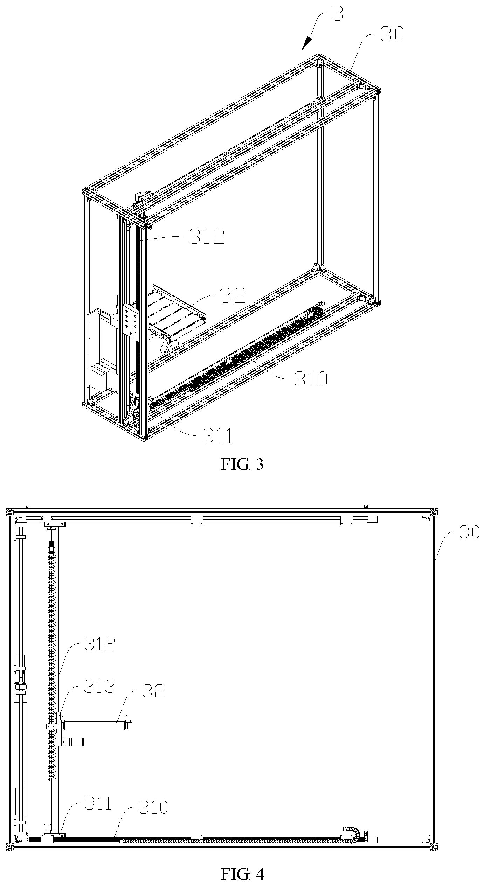

The one-to-one correspondence between various components as shown in FIG 3 to FIG 6 and their reference signs is as follows:
3 allocating mechanism: 30 gantry, 310 horizontal linear rail, 311 horizontal sliding block, 312 vertical linear rail, 313 vertical sliding block, 32 docking component.

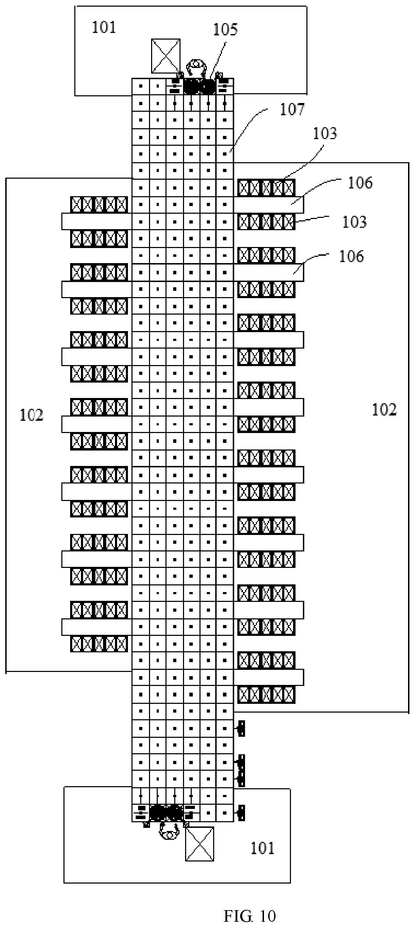

The one-to-one correspondence between various components as shown in FIG 10 to FIG 12 and their reference signs is as follows:
101 workstation area, 102 holder storage area, 103 holder, 1030 legs, 1031 horizontal shelf, 114 receptacle, 105 first handling mechanism, 1050 first movement component, 1051 bearing member, 1052 rotating member, 1053 upright, 106 second handling mechanism, 1260 second movement component, 12601 horizontal slide rail, 12602 vertical slide rail, 1261 second pick-and-place component, 107 main passage, 108 target stock.

### DETAILED DESCRIPTION

In order to make the purposes, technical solutions and advantages of embodiments of the present disclosure clearer, the technical solutions according to embodiments of the present disclosure will be described clearly and completely below with reference to the accompanying drawings according to embodiments of the present disclosure. Apparently, embodiments described herein are only some embodiments of the present disclosure, rather than all. The components in embodiments of the present disclosure generally described here and illustrated in the drawings may be arranged and designed in a variety of different configurations. Therefore, the following detailed description on embodiments of the present disclosure shown in the drawings is not intended to limit the scope of the present disclosure, but to represent selected embodiments of the present disclosure. All other embodiments obtained by those skilled in the art based on the embodiments described in the present disclosure without creative efforts shall fall within the protection scope of the present disclosure.

In addition, the terms "first", "second", and the like used in the description of embodiments of the present disclosure, the claims and the drawings are used to distinguish similar objects, and are not intended to describe a specific order or sequence. It is to be understood that the terms used as such are interchangeable under appropriate circumstances, so that the embodiments described herein can be practiced in sequences other than those illustrated or described herein.

The terms like "a plurality of', "multiple" or "several" used herein means two or more. The term "and/or" describes association relationship between associated objects, and indicates that there may exist three relationships. For example, the expression "A and/or B" may represent three case, i.e., A alone, both A and B, and B alone. The character "/" generally indicates an "or" relationship of the associated objects.

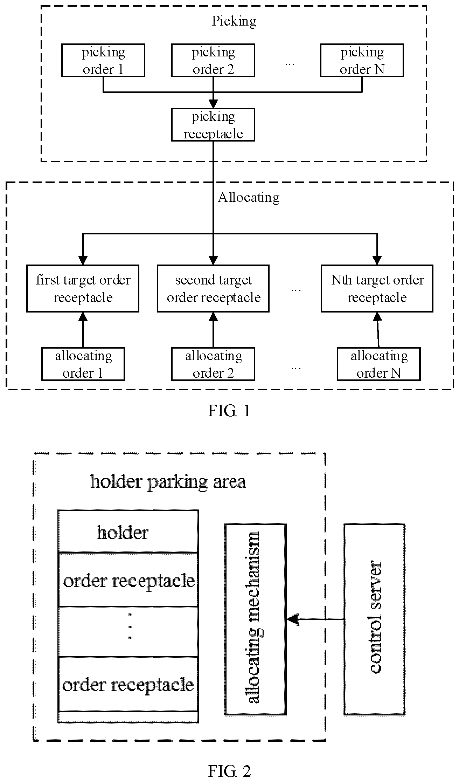

In order to facilitate understanding, a working principle of an allocating process will be described in detail below with reference to FIG 1 which shows a principle block diagram of a correlation between picking and allocating.

Referring to FIG 1, in a picking process of logistics operations, according to picking orders, articles listed in several picking orders are picked manually or picked by an automatic equipment, and placed in a picking receptacle in combination, to reduce the handling times of the picking receptacle. After the picking receptacle enters the allocating process, articles in the picking receptacle are divided into target allocating receptacles manually or by an automatic equipment according to allocating orders issued by a superior system, and the target allocating receptacles have a one-to-one correspondence with the allocating orders. For example, one or more articles listed in allocating order 1 are taken out from the picking receptacle and put into a first target allocating receptacle, and so on.

Picking orders are divided in a temporal sequence. For example, articles ordered within 2 hours are classified into one picking order. Allocating orders may be divided by customers. For example, if customer A purchases multiple articles, the system will group the articles ordered by customer A into one allocating order. In the allocating process, the articles listed in this allocating order are placed into one target allocating receptacle, and then enter a subsequent packaging process.

It should be noted that FIG 1 only illustrates one type of allocating process in the logistics operations as an example, but the present disclosure is not limited thereto.

The existing picking and allocating operations are all done manually, with a low picking and allocating efficiency and a high operation error rate.

To this end, the present disclosure provides a picking and allocating system, which automatically completes at least some steps of the picking and allocating operations by using equipment, and thus improves the picking and allocating efficiency and reduces the operation error rate.

The picking and allocating system of the present disclosure includes a holder parking area, an allocating mechanism and a control server. The holder parking area is configured for parking holders, and the holders are used to store order receptacles. The allocating mechanism is arranged in the holder parking area, and configured to: receive at least one stock listed in an order, bring the at least one stock to move from a docking position to an order receptacle corresponding to the order, and transfer the at least one stock to the order receptacle, and return to the docking position. The control server is communicatively connected with the allocating mechanism, and configured to obtain position information of the order receptacle on the holder according to the order and send the position information to the allocating mechanism.

The working process of the picking and allocating system of the present application is as follows.

The control server receives an order sent by a user or a superior system, and sends position information of an order receptacle on the holder corresponding to the order to the allocating mechanism. The allocating mechanism receives at least one stock listed in the target order at the docking position, brings the at least one stock to move from the docking position to the order receptacle corresponding to the order, and puts the at least one stock into the order receptacle, and returns to the docking position to wait for a next allocating task.

It can be seen that compared with the existing picking and allocating tasks operated manually completely, the picking and allocating system of the present disclosure automatically completes the allocating task by using the allocating mechanism, which improves the efficiency of the picking and allocating operations and reduces the operation error rate.

In order to facilitate understanding, the specific structure and working principle of the picking and allocating system of the present disclosure will be described in detail below with reference to FIG 2 to FIG 12 in conjunction with several embodiments.

According to an embodiment of the present disclosure, the picking and allocating system of the present disclosure includes the holder parking area, the allocating mechanism and the control server.

The holder parking area is an area artificially designated from a warehouse, and configured for parking holders. The size of this area depends at least on factors such as the number of parked holders and the number of allocating mechanisms of the picking and allocating system in the warehousing system, and can be adjusted and determined by those skilled in the art according to the above factors.

The holder refers to any device that can be used to store order receptacles, and the device may be a rack, a tray, etc.

The order receptacle refers to a device for accommodating or placing stocks listed in an order. One order corresponds to one order receptacle. The order receptacle refers to a tote, a carton or a basket into which a stock is to be delivered. The size of the order receptacle may be set differently according to different needs of projects. The size information of the order receptacle is maintained in the control server, and the control server needs to manage and control the position of the order receptacle on the holder.

The allocating mechanism is arranged in the holder parking area, and configured to: receive at least one stock listed in an order, bring the at least one stock to move from a docking position to an order receptacle, and transfer the at least one stock to the order receptacle, and return to the docking position.

According to an embodiment of the present disclosure, referring to FIG 3 to FIG 6, the allocating mechanism 3 of the present disclosure includes a gantry 30, a movement component and a docking component 32.

The gantry 30 is arranged in the holder parking area, and its function is to support the movement component and the docking component 32, that is, to provide a supporter for the movement component and the docking component 32.

In detail, continue to refer to FIG 3 to FIG 6, the gantry 30 is of a square grid hollow frame structure as a whole. Its bottom part, top part, left part and right part each have a square grid structure composed of and sequentially spliced by four profile steels, and its bottom part and top part are each fixedly connected to the left part and right part by angle steels and fasteners.

It can be understood that the gantry 30 is not limited to the above structure. According to another embodiment of the present disclosure, the gantry 30 of the present disclosure may have a bottom plate, a top plate, a left plate and a right plate, and are formed by splicing them together. The bottom plate, the top plate, the left plate and the right plate are all metal plates, as long as they can bear the weight of the movement component and the docking component 32.

The movement component is provided with the docking component 32, and movement component is configured to bring the docking component 32 to move between the docking position and the order receptacle.

Continuing to refer to FIG 3 to FIG 6, according to an embodiment of the present disclosure, the movement component includes a horizontal slide rail and a vertical slide rail.

The horizontal slide rail includes a horizontal linear rail 310 extending in a horizontal direction, a horizontal sliding block 311 slidably connected to the horizontal linear rail 310, and a horizontal driving element configured to drive the horizontal sliding block 311 to slide on the horizontal linear rail 310 in the horizontal direction.

In embodiments of the present disclosure, continuing to refer to FIG 3 to FIG 6, the movement component includes two horizontal slide rails arranged in parallel, and these two horizontal slide rails share a horizontal driving element. One of the two horizontal slide rails is arranged between two opposite steel sections at the top of the gantry 30, and the other one of the two horizontal slide rails is arranged between two opposite profile steels at the bottom of the gantry 30.

In embodiments of the present disclosure, the horizontal driving element of the present disclosure may be a mechanism that uses a pressure medium to push the horizontal sliding block 311, such as a pneumatic cylinder or a hydraulic cylinder.

According to another embodiment of the present disclosure, the horizontal driving element of the present disclosure includes a horizontal motor and a horizontal power transmission mechanism, the horizontal power transmission mechanism is connected to the horizontal motor in a power transmission manner, and the horizontal power transmission mechanism is configured to convert the rotational motion of the horizontal motor into reciprocating rectilinear motion to drive the horizontal sliding block 311 to rectilinearly reciprocate on the horizontal linear rail 310 in the horizontal direction to drive the allocating mechanism 3 to move from the docking position to a horizontal coordinate of a target position of the order receptacle on the holder, or return from the horizontal coordinate to the docking position.

The horizontal power transmission mechanism is a ball screw nut mechanism or a rack and pinion transmission mechanism.

In embodiments of the present disclosure, continuing to refer to FIG 1, the vertical slide rail includes a vertical linear rail 312 extending in a vertical direction, a vertical sliding block 313 slidably connected to the vertical linear rail 312, and a vertical driving element configured to drive the vertical sliding block 313 to slide on the vertical linear rail 312 in the vertical direction.

As mentioned above, the movement component of the present disclosure includes two horizontal slide rails arranged in parallel. An upper end of the vertical linear rail 312 is arranged on the horizontal sliding block 311 of the horizontal slide rail arranged at the top of the gantry 30, and a lower end of the vertical linear rail 312 is arranged on the horizontal sliding block 311 of the horizontal slide rail arranged at the bottom of the gantry 30. Under the action of the horizontal driving element, the vertical linear rail 312 moves in the horizontal direction along with the two horizontal sliding blocks 311.

In this way, the movement stability and safety of the vertical slide rail can be ensured.

In embodiments of the present disclosure, the vertical driving element of the present disclosure may be a mechanism that uses pressure medium to push the vertical sliding block 313, such as a pneumatic cylinder or a hydraulic cylinder.

According to another embodiment of the present disclosure, the vertical driving element of the present disclosure includes a vertical motor and a vertical power transmission mechanism, the vertical power transmission mechanism is connected to the vertical motor in a power transmission manner, and the vertical power transmission mechanism is configured to convert the rotational motion of the vertical motor into reciprocating rectilinear motion to drive the vertical sliding block 313 to rectilinearly reciprocate on the vertical linear rail 312 in the vertical direction to drive the allocating mechanism 3 to move from the docking position to a vertical coordinate of the target position of the order receptacle on the holder, or return from the vertical coordinate to the docking position.

The vertical power transmission mechanism is a ball screw nut mechanism or a rack and pinion transmission mechanism.

According to an embodiment of the present disclosure, the movement component of the present disclosure only includes the horizontal slide rail. That is, the movement component brings the docking component 32 to slide only in the horizontal direction. In other words, the docking component 32 can only move in the horizontal direction from the docking position to an order receptacle at the same horizontal plane.

According to an embodiment of the present disclosure, the movement component of the present disclosure only includes the vertical slide rail. That is, the movement component brings the docking component 32 to slide only in the vertical direction. In other words, the docking component 32 can only move in the vertical direction from the docking position to an order receptacle.

It can be understood that in actual application scenarios, those skilled in the art can select the specific structure of the allocating mechanism 3 as required.

The docking component 32 is configured to receive a stock or place a stock into an order receptacle.

Referring to FIG 3 to FIG 6, in embodiments of the present disclosure, the docking component 32 includes a bracket, a conveying belt and a conveying drive element. The bracket is arranged on the movement component and configured to reciprocate between the docking position and the order receptacle with the movement component; the conveying belt is rotatably arranged on the bracket; the conveying drive element is configured to drive the conveying belt to rotate relative to the bracket to bring a stock to a middle part of the conveying belt or allocate a tock on the conveying belt into the order receptacle.

In detail, the bracket is arranged on the vertical sliding block 313 of the vertical slide rail of the movement component, the vertical linear rail 312 of the vertical slide rail slides along the horizontal linear rail 310 with the horizontal sliding block 311 to drive the bracket to slide relative to the gantry 30 in the horizontal direction, and the bracket also slides relative to the gantry 30 in the vertical direction with the vertical sliding block 313.

The conveying belt includes a driving roller, at least one driven roller and an endless belt. The driving roller and the at least one driven roller are arranged in parallel and rotatably arranged on the bracket, the endless belt is tensioned and arranged between the driving roller and the driven roller, and the conveying drive element is connected to the driving roller in a power transmission manner, to drive the driving roller to rotate relative to the bracket, the endless belt also rotates with the driving roller under the action of friction and drives the driven roller to rotate. Changing the rotation direction of the conveying drive element will change the rotation direction of the conveying belt.

In embodiments of the present disclosure, the conveying drive element is a motor.

In detail, the conveying drive element rotates in a first direction, and the driving roller rotates in the first direction along with the conveying drive element, and drives the endless belt to rotate in the first direction, to bring the stock placed on the endless belt to a middle area of the endless belt. When the docking component 32 carrying the stock reaches the order receptacle, in this embodiment, the docking component 32 is located above an opening of the order receptacle, or at least the edge of the endless belt of the docking component 32 is docked with the opening of the order receptacle, the conveying drive element rotates in a second direction, and the driving roller rotates in the second direction along with the conveying drive element, and drives the endless belt to rotate in the second direction also, to drive the stock to move towards the opening of the order receptacle until the stock is fed into the order receptacle.

The control server is connected with the allocating mechanism in wireless communication. Specifically, data communication is implemented in the form of a standard application programming interface (API). The control server is a software system that runs on a server, has data storage and information processing capabilities, and can be wirelessly connected with a software system of the allocating mechanism. The control server may include one or more servers, and may have a centralized control architecture or a distributed computing architecture. The control server has a processor and a memory, the memory may have an order pool, the order pool has stored order information, and a database in the memory has stored therein target positions of respective order receptacles corresponding to orders.

The above-mentioned picking and allocating system of the present disclosure can cooperate with a worker or other assistant equipment to complete the picking and allocating tasks. In the following, the working process of the picking and allocating system of the present disclosure in different application scenarios will be described in detail with reference to different embodiments.

A specific application scenario of the picking and allocating system according to embodiments of the present disclosure is as follows.

The allocating mechanism is located at the docking position. The worker places a stock of an order on the docking component of the allocating mechanism. The control server sends position information of an order receptacle on the holder corresponding to the order to the allocating mechanism, the movement component of the allocating mechanism moves from the docking position to the order receptacle, and the docking component of the allocating mechanism puts the stock into the order receptacle to complete the allocating operation once, and returns to the docking position to prepare for the next allocating task.

According to an embodiment of the present disclosure, the control server of the present disclosure is configured to send a picking instruction. The picking instruction includes picking out a total number of same stocks listed in a plurality of orders, and placing stocks of the plurality of orders on the allocating mechanism in batches, respectively, to allow the allocating mechanism to implement delivery until all of the orders are completed. It should be noted that the expression "in batches" means that the allocating mechanism completes one order at a time, and after completing one order, the allocating mechanism returns to the docking position to receive the stock of another order.

A specific application scenario of the picking and allocating system according to embodiments of the present disclosure is as follows.

According to the picking instruction, the worker picks out the total number of same stocks listed in the plurality of orders, and then places the stocks required by one of these orders on the allocating mechanism based on the picking instruction, and the allocating mechanism delivers these stocks to an order receptacle corresponding to the order and then return to the docking position. The worker places the stocks required by another order on the allocating mechanism, and the allocating mechanism repeats the above operations until the delivery tasks of all orders are completed.

Apparently, in this embodiment, the picking and allocating system has completed part of the allocating tasks for the plurality of orders, and the order receptacles of these orders will still be stored on the holder to receive stocks in the next allocation. The picking and allocating operations can pick and allocate the same kind of stocks listed in a plurality of orders at a time, with a high picking and allocating efficiency.

According to an embodiment of the present disclosure, the control server of the present disclosure is configured to send a picking instruction. The picking instruction includes picking out all stocks listed in an order, and placing all stocks on the allocating mechanism at the docking position. These stocks are the same type of stocks or different types of stocks. In detail, referring to FIG 3 to FIG 6, the docking component 32 of the allocating mechanism is located at the docking position, and the above-mentioned stocks are placed on the docking component 32 at the docking position.

In detail, the worker picks out all stocks listed in an order according to the picking instruction, and then places all these stocks on the allocating mechanism according to the picking instruction. The allocating mechanism delivers these stocks to an order receptacle corresponding to the order, and returns to the docking position.

In detail, referring to FIG 3 to FIG 6, the worker places all these stocks on the docking component 32 of the allocating mechanism according to the picking instruction. The docking component 32 delivers these stocks to the order receptacle corresponding to the order, and returns to the docking position.

In this embodiment, the picking and allocating system of the present disclosure completes one order in once operation, and the order receptacle corresponding to the order can be sent to a downstream work station for a corresponding operation. For example, the downstream work station may be a packaging station. In this way, an order can be completely completed in a shorter period of time.

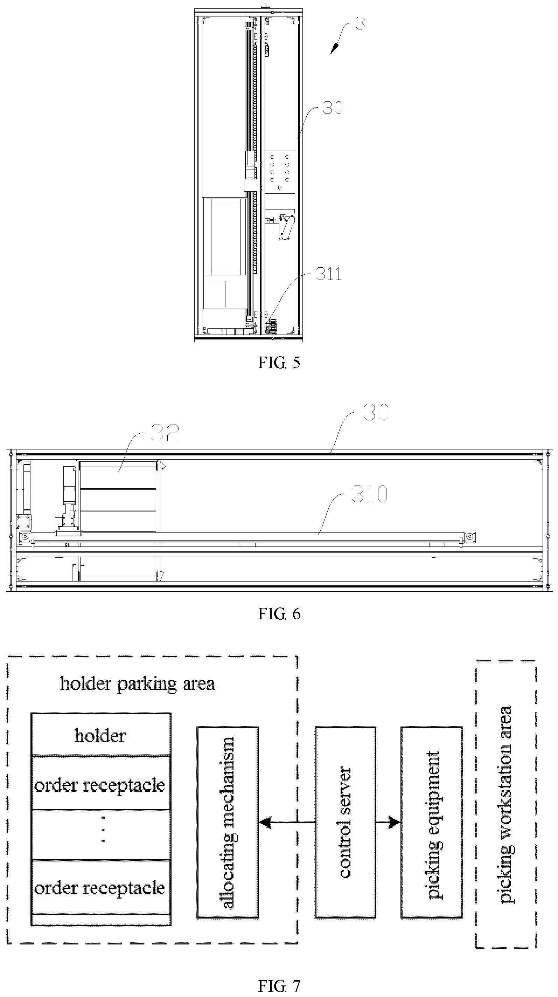

In order to improve the efficiency of picking and allocating operations, according to an embodiment of the present disclosure, referring to FIG 7, in addition to the holder parking area, the holder, and the order receptacle described above, the picking and allocating system of the present disclosure also includes a picking workstation area and a picking equipment.

The picking workstation area is an area that is artificially designated from the warehouse and is different from the holder parking area. The size of this area depends at least on factors such as the size and number of picking stations, and can be adjusted and determined by those skilled in the art according to the above factors.

The picking equipment is configured to receive stocks in the picking workstation area and identify stock information of the stocks, move to a docking position of an allocating mechanism corresponding to the stock information according to the stock information, and place the stocks on the corresponding allocating mechanism.

The picking equipment is specifically a picking robot.

The control server is also communicatively connected with the picking equipment, and configured to send the docking position of the allocating mechanism to the picking equipment corresponding to the stock information.

The picking equipment has stored therein a path from a current position of the picking equipment in the picking workstation area to the docking position of the allocating mechanism. The picking equipment moves from the current position to the docking position of the allocating mechanism by using an automatic navigation device of an automated guided vehicle (AGV).

If the picking and allocating system includes a plurality of allocating mechanisms, the memory of the control server has stored therein position information of a corresponding docking position of each allocating mechanism.

A specific application scenario of the picking and allocating system according to embodiments of the present disclosure is as follows.

The worker places a stock on the picking equipment in the picking workstation area. An identification device on the picking equipment identifies the stock information of the stock. According to the stock information, the control server sends the docking position of the corresponding allocating mechanism to the picking equipment. The picking equipment carries the stock to the docking position of the allocating mechanism and puts the stock on the allocating mechanism. Then, the control server sends position information of an order receptacle on the holder corresponding to an order to the allocating mechanism according to order information corresponding to the stock information. The allocating mechanism carries the stock to the order receptacle, puts the stock into the order receptacle, and finally returns to the docking position to wait for the next allocating task.

It can be seen that with the picking and allocating system according to this embodiment, the stock picking task is automatically completed by the picking equipment, which further improves the efficiency of the picking and allocating operations, and reduces the misoperation rate caused by manual participation.

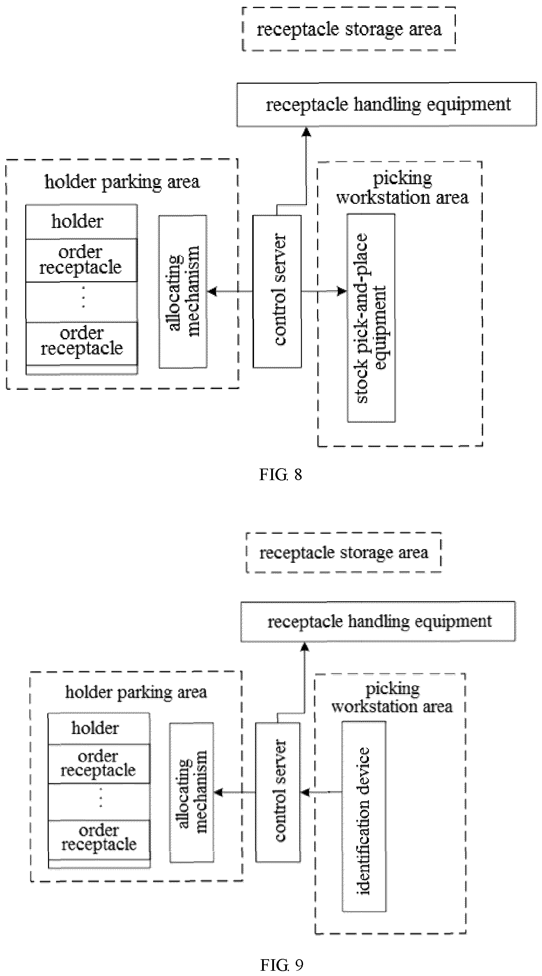

According to an embodiment of the present disclosure, referring to FIG 8, in addition to the holder parking area, the holder, the order receptacle, the allocating mechanism and the control server as described above, the picking and allocating system of the present disclosure also includes a receptacle storage area, a picking workstation area, a receptacle handling equipment and a stock pick-and-place equipment.

The receptacle handling equipment is configured to transport an inventory receptacle from the receptacle storage area to the picking workstation area, and the inventory receptacle is used to place stocks to be sorted.

It should be noted that the receptacle storage area is an area artificially designated from the warehouse, and configured to store inventory receptacles. The size of this area depends at least on factors such as the number of receptacles to be stored, and can be adjusted and determined by those skilled in the art according to the above factors.

The receptacle storage area and the holder storage area may be the same area or may be different areas independent from each other. If they are the same area, receptacles are stored on the holder. If they are different areas independent from each other, the receptacle storage area is only used to store inventory receptacles, and the inventory receptacle is used to store stocks to be sorted. One or more kinds of stock keeping unit (SKU) stocks may be placed in an inventory receptacle. The inventory receptacle includes but is not limited to a stock box. The inventory receptacle may also be a movable rack, which will be moved to a corresponding workstation area or workbench for placing order stocks as required by an order task.

The receptacle handling equipment includes a handling vehicle, a bracket and at least one tray arranged on the bracket. The tray is configured to carry the inventory receptacle. The bracket is arranged on the handling vehicle. The handling vehicle is configured to bring the bracket to move between the receptacle storage area and the picking workstation area.

According to an embodiment of the present disclosure, the handling vehicle is specifically an AGV vehicle with an automatic navigation function.

According to an embodiment of the present disclosure, the receptacle handling equipment of the present disclosure includes a plurality of trays, and the plurality of trays are arranged at intervals in the horizontal direction or in the vertical direction.

The stock pick-and-place equipment is arranged between the picking workstation area and the holder parking area, and the stock pick-and-place equipment is configured to: take out the stock in the inventory receptacle, and place the stock on the allocating mechanism, and identify the stock information of the stock.

According to an embodiment of the present disclosure, the stock pick-and-place equipment of the present disclosure is specifically a mechanical arm.

The control server is communicatively connected with the allocating mechanism, the receptacle handling equipment and the stock pick-and-place equipment, and configured to obtain position information of an order receptacle according to the stock information and order information corresponding to the stock information.

A specific application scenario of the picking and allocating system according to embodiments of the present disclosure is as follows.

In the receptacle storage area, the worker places an inventory receptacle required for an order on the receptacle handling equipment. The receptacle handling equipment transports the inventory receptacle to the picking workstation area. The stock pick-and-place equipment takes out the stock from the inventory receptacle, identifies the stock information, and places the stock on the allocating mechanism. The allocating mechanism transports the stock to the order receptacle corresponding to the order, delivers the stock to the order receptacle, and finally returns to the docking position to wait for the next allocating task.

It can be seen that the picking and allocating system of the present disclosure can complete the entire picking and allocating process completely and automatically, with a high picking and allocating efficiency and a low misoperation rate, and basically without manual participation.

According to an embodiment of the present disclosure, in addition to the holder parking area, the holder, the order receptacle, the allocating mechanism and the control server as described above, the picking and allocating system of the present disclosure also includes a picking workstation area, a receptacle handling equipment and a stock pick-and-place equipment.

It should be noted that the structures and working principles of the picking workstation area, the receptacle handling equipment, and the stock pick-and-place equipment are the same as the previous embodiment, which can be implemented by those skilled in the art according to the description hereinbefore, and will not be elaborated here.

The receptacle handling equipment is configured to: transport inventory receptacles required by a plurality of orders from the receptacle storage area to the picking workstation area according to the order information, or transport inventory receptacles from the picking workstation area to the receptacle storage area after a sorting operation is completed.

A specific application scenario of the picking and allocating system according to embodiments of the present disclosure is as follows.

In the receptacle storage area, the worker places a plurality of inventory receptacles required by a plurality of orders on the receptacle handling equipment. The receptacle handling equipment transports these inventory receptacles to the picking workstation area. The stock pick-and-place equipment takes out a stock from an inventory receptacle and identifies stock information, and place the stock on the allocating mechanism. The allocating mechanism transports the stock to an order receptacle corresponding to an order, delivers the stock to the order receptacle, and finally returns to the docking position to wait for the next allocating task.

At the same time, the stock pick-and-place equipment takes out another stock from the same or another inventory receptacle and repeats the above operation until the picking and allocating operations for all the orders are completed. Finally, the receptacle handling equipment transports empty inventory receptacles or inventory receptacles with remaining stocks to the receptacle storage area.

In this embodiment, the receptacle handling equipment can transport the inventory receptacles required by a plurality of orders once. When the allocating mechanism performs the allocating task, the stock pick-and-place equipment takes out the stock and waits at the docking position. After the allocating mechanism reaches the docking position, the stock pick-and-place equipment immediately places the stock on the allocating mechanism, saving the waiting time of the allocating mechanism at the docking position, so as to realize seamless cooperation between the stock pick-and-place equipment and the allocating mechanism in time dimension and improve the picking and allocating efficiency.

According to an embodiment of the present disclosure, referring to FIG 9, in addition to the holder parking area, the holder, the order receptacle, the allocating mechanism and the control server as described above, the picking and allocating system of the present disclosure also includes a picking workstation area, a receptacle handling equipment and an identification device.

It should be noted that the structures and working principles of the picking workstation area, the receptacle handling equipment and the identification device are the same as the previous embodiment, which can be implemented by those skilled in the art according to the description hereinbefore, and will not be elaborated here.

The receptacle handling equipment is configured to transport an inventory receptacle having stored therein a stock listed in an order from the receptacle storage area to the picking workstation area according to the order.

In the receptacle storage area, the worker places the inventory receptacle required by the order on the receptacle handling equipment. The receptacle handling equipment transports the inventory receptacle to the picking workstation area. The worker takes out the stock from the inventory receptacle and uses the identification device to identify the stock information, and then takes out the stock and places the stock on the allocating mechanism. The allocating mechanism transports the stock to an order receptacle corresponding to the order, delivers the stock to the order receptacle, and finally returns to the docking position to wait for the next allocating task.

The identification device includes any one of a reader, a 2D/3D image acquisition device, or a depth information acquisition device.

In this embodiment, in the picking and allocating system, the stock is take out from the inventory receptacle and placed on the allocating mechanism by the worker.

According to an embodiment of the present disclosure, in addition to the holder parking area, the holder, the order receptacle, the allocating mechanism and the control server as described above, the picking and allocating system of the present disclosure also includes a picking workstation area, a receptacle handling equipment and an identification device.

It should be noted that the structures and working principles of the picking workstation area, the receptacle handling equipment and the identification device are the same as the previous embodiment, which can be implemented by those skilled in the art according to the description hereinbefore, and will not be elaborated here.

The receptacle handling equipment is configured to: transport inventory receptacles required by a plurality of orders from the receptacle storage area to the picking workstation area according to the order information, or transport inventory receptacles from the picking workstation area to the receptacle storage area after the sorting operation is completed.

A specific application scenario of the picking and allocating system according to embodiments of the present disclosure is as follows.

In the receptacle storage area, the worker places a plurality of inventory receptacles required by a plurality of orders on the receptacle handling equipment. The receptacle handling equipment transports these inventory receptacles to the picking workstation area. The worker takes out a stock from an inventory receptacle and uses the identification device to identify the stock information, and then takes out the stock and places the stock on the allocating mechanism. The allocating mechanism transports the stock to an order receptacle corresponding to an order, delivers the stock to the order receptacle, and finally returns to the docking position to wait for the next allocating task. At the same time, the worker takes out another stock from the same or another inventory receptacle and repeats the above operation until the picking and allocating operations for all the orders are completed. Finally, the receptacle handling equipment transports empty inventory receptacles or inventory receptacles with remaining stocks to the receptacle storage area.

According to an embodiment of the present disclosure, in addition to the holder parking area, the holder, the order receptacle, the allocating mechanism and the control server as described above, the picking and allocating system of the present disclosure also includes a picking workstation area and a stock pick-and-place equipment.

It should be noted that the structures and working principles of the picking workstation area and the stock pick-and-place equipment are the same as the previous embodiment, which can be implemented by those skilled in the art according to the description hereinbefore, and will not be elaborated here.

The stock pick-and-place equipment is arranged between the picking workstation area and the holder parking area, and configured to: take out a stock for which the sorting operation is completed from the picking workstation area, place the stock on the allocating mechanism, and identify stock information of the stock.

A specific application scenario of the picking and allocating system according to embodiments of the present disclosure is as follows.

In the picking workstation area, the worker takes out a stock from the picking workstation area and identifies the stock information, and then takes out the stock and places the stock on the allocating mechanism. The allocating mechanism transports the stock to an order receptacle corresponding to an order, delivers the stock to the order receptacle, and finally returns to the docking position to wait for the next allocating task.

According to an embodiment of the present disclosure, in addition to the holder parking area, the holder, the order receptacle, the allocating mechanism and the control server, the picking and allocating system of the present disclosure also includes a stock handling equipment and an identification device.

The stock handling equipment is configured to: move to a storage location of a stock listed in an order in the stock storage area according to order information, receive the stock, and transport the stock to the picking workstation area. The identification device is configured to identify stock information of the stock.

According to an embodiment of the present disclosure, the stock handling equipment of the present disclosure includes a handling vehicle, a bracket and at least one tray arranged on the bracket. The tray is configured to carry a stock. The bracket is arranged on the handling vehicle. The handling vehicle is configured to bring the bracket to move between the stock inventory area and the picking workstation area.

According to an embodiment of the present disclosure, the handling vehicle is specifically an AGV vehicle with an automatic navigation function.

The control server is communicatively connected with both the stock handling equipment and the identification device, and configured to send the position information of the stock listed in the order in the stock storage area to the stock handling equipment.

A specific application scenario of the picking and allocating system according to embodiments of the present disclosure is as follows.

The stock handling equipment moves to a position of a stock listed in an order in the stock storage area according to order information. The worker places the stock on the stock handling equipment. The stock handling equipment carries the stock and moves to the picking workstation area. The worker takes out the stock from the stock handling equipment, identifies stock information of the stock using an identification device, and then places the stock on the allocating mechanism. The allocating mechanism transports the stock from the docking position to an order receptacle corresponding to the order according to order information, delivers the stock into the order receptacle, and returns to the docking position to wait for the next allocating task.

According to an embodiment of the present disclosure, in addition to the holder parking area, the holder, the order receptacle, the allocating mechanism and the control server, the picking and allocating system of the present disclosure at least further includes a handling base and a handling vehicle.

The handling base is configured to support a holder or an order receptacle, and has space for a handling vehicle to enter from the ground.

Specifically, the handling base has four legs, and the four legs support the main body of the handling base to form a certain space from the ground in a height direction. The space is large enough for a handling vehicle to enter from the ground.

The handling vehicle is specifically an AGV vehicle with the automatic navigation function. The handling vehicle also has a liftable support frame. The support frame is normally folded, and when the holder or the order receptacle needs to be transported, the handling vehicle enters the space of the handling base, its support frame rises to lift the handling base off the ground, and then the handling vehicle transports the handling base from a current position to a specified position.

A first specific application scenario of the picking and allocating system according to embodiments of the present disclosure is as follows.

When the control server receives an allocating task order, the handling vehicle takes advantage of the handling base to transport a holder having empty order receptacles from the holder storage area to the holder parking area for the allocating mechanism to deliver stocks. After the order is completed, the handling vehicle takes advantage of the handling base again to transport the holder from the holder parking area to the downstream workstation area.

A second specific application scenario of the picking and allocating system according to embodiments of the present disclosure is as follows.

When the control server receives an allocating task order, the handling vehicle takes advantage of the handling base to transport an empty holder from the holder storage area to the holder parking area, and transport an empty order receptacle from the receptacle storage area to the holder parking area. The worker or other assistant equipment places the empty order receptacle to a designated position on the holder for the allocating mechanism to deliver stocks. After the order is completed, the handling vehicle takes advantage of the handling base again to transport the holder from the holder parking area to the downstream workstation area.

A second specific application scenario of the picking and allocating system according to embodiments of the present disclosure is as follows.

There are empty holders parked in the holder parking area. When the control server receives an allocating task order, the handling vehicle takes advantage of the handling base to transport an empty order receptacle from the receptacle storage area to the holder parking area. The worker or other assistant equipment places the empty order receptacle to a designated position on the holder for the allocating mechanism to deliver stocks. After the order is completed, the handling vehicle takes advantage of the handling base again to transport the holder from the holder parking area to the downstream workstation area.

In this way, the picking and allocating system of the present disclosure can complete automatic transportation of the holder or the order receptacle, which can further improve the picking and allocating efficiency.

According to an embodiment of the present disclosure, in addition to the holder parking area, the holder, the order receptacle, the allocating mechanism and the control server, the picking and allocating system of the present disclosure at least also includes a handling base and a handling vehicle. It should be noted that the specific structures and working principles of the handling base and the handling vehicle are exactly the same as those in the previous embodiment, and will not be elaborated here.

In this embodiment, the control server of the present disclosure is also communicatively connected with the handling vehicle, and further configured to: control the handling vehicle to transport a handling base carrying an empty holder or order receptacle to the holder parking area when receiving an order, or control the handling vehicle to transport a handling base carrying a holder or an order receptacle having allocated stocks to the downstream workstation area after the order is completed.

It should be noted that the difference between this embodiment and the previous embodiment is that the control server controls the handling vehicle according to a completion status of an order. That is, the handling vehicle is also automatically controlled by the control server to execute a corresponding instruction, thereby further improving the picking and allocating efficiency.

Finally, it should be noted that the handling base and handling vehicle of the picking and allocating system of the present disclosure may be used in combination with any of the above embodiments. The handling base and handling vehicle mainly perform a preparation task of the holder or the order receptacle before the allocating mechanism starts the allocating and delivering operation and a task of transporting the holder or the order receptacle to the downstream workstation area after the delivering operation.

In addition, it should be noted that the existing sorting and allocating system lays a plurality of receptacles required for sorting on the sorting site, and then stocks to be sorted are delivered manually or delivered by an automatic equipment one by one to their respective target receptacles. This kind of picking and allocating system can handle sorting tasks with few kinds of stocks, however when dealing with sorting tasks with wide variety and large quantities of stocks, a large sorting site is needed to lay a large number of receptacles, which causes great trouble to users.

To this end, the present disclosure provides a new type of picking and allocating system. The picking and allocating system can implement sorting tasks with wide variety and large quantities of stocks in a limited sorting site, and well solves the problems and troubles faced by users.

The picking and allocating system of the present disclosure includes a workstation area, a holder storage area, holders, receptacles, a picking equipment and an allocating mechanism. The holder storage area is used to store holders. The holder includes at least two layers of storage space extending in a height direction, each layer of storage space has at least one storage location, and the storage location is used to store the receptacle. The picking equipment is configured to receive a target stock in the workstation area and transport the target stock from the workstation area to the holder storage area. The allocating mechanism is arranged in the holder storage area, and configured to: receive the target stock delivered by the picking equipment, transport the target stock to a target receptacle corresponding to the target stock on the holder, and deliver the target stock into the target receptacle.

A working mode of the picking and allocating system is as follows: the picking equipment receives a delivered target stock in the workstation area, transports the target stock to the allocating mechanism, and delivers the target stock to the allocating mechanism, and the allocating mechanism transports the target stock to a target receptacle corresponding to the target stock, and delivers the target stock to the target receptacle.

The holder of the picking and allocating system of the present disclosure has at least two layers of storage locations extending in the height direction. The number of holders and the number of storage locations on the holders can be adjusted according to the sorting workload. Compared with the existing manner of laying receptacles on the sorting site, the picking and allocating system of the present disclosure can place more holders in a limited sorting site and store a plurality of receptacles on the holders, which is suitable for implementing sorting tasks with a wide variety and large quantities of stocks. In other words, compared with the existing picking and allocating system, the picking and allocating system of the present disclosure can increase the number of receptacles several times when the area of a user's existing sorting site cannot be expanded to cope with sorting scenarios that require a large number of receptacles.

In addition, in the picking and allocating system of the present disclosure, the picking equipment is used to transport the target stock between the workstation area and the holder storage area, and the allocating mechanism is arranged in the holder storage area to receive the target stock delivered by the picking equipment, transport the target stock to the target receptacle, and deliver the target stock into the target receptacle, thereby automatically completing the sorting task and reducing the labor intensity of manual sorting.

In order to facilitate understanding, the picking and allocating system provided by the present disclosure and its working mode will be described in detail below with reference to specific embodiments in conjunction with FIG 10 to FIG 12.

Referring to FIG 10 to FIG 12, according to an embodiment of the present disclosure, the picking and allocating system of the present disclosure includes a picking workstation area 101, a holder storage area 102, holders 103, receptacles 114, a picking equipment 105 and an allocating mechanism 106.

The picking workstation area 101 is an area divided from a sorting site, and the workstation area is provided with an operation platform or the holder to place stocks and the like.

According to an embodiment of the present disclosure, a holder parking area is divided from the picking workstation area 101 of the present disclosure, the holder for storing stocks is transported to the holder parking area for the worker or robot to take out the stock from the holder and deliver the stock to the picking equipment, or for the worker or robot to place the stock taken out from the picking equipment into the holder. After the holder is fully filled with the receptacle, the holder will be transported away from the workstation area to the next workstation area.

According to an embodiment of the present disclosure, a conveyor is provided in the picking workstation area 101 of the present disclosure, and the conveyor is configured to: transport the stock in the current workstation area to the next workstation area, or transport the stock in a previous workstation area to the current workstation area. The conveyor includes a belt conveyor, a powered roller conveyor, or a combination of the both.

The holder storage area 102 is another area divided from the sorting site, and it is different from the workstation area. The holder storage area is configured to store holders.

The holder includes at least two layers of storage space extending in the height direction, each layer of storage space has at least one storage location, and the storage location is used to store the receptacle.

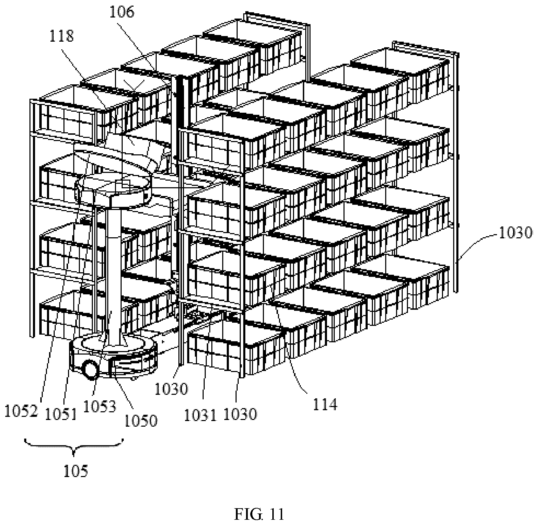

According to an embodiment of the present disclosure, referring to FIG 11, the holder of the present disclosure is specifically a fixed holder. The holder includes four legs 1030 supported on the sorting site and a plurality of horizontal shelves 1031 arranged on the four legs 1030 at intervals in the height direction. A storage space between two adjacent horizontal shelves is divided into a plurality of storage locations, and the storage location is used to store a receptacle 114. Each storage location has unique identity information, so that the system can find a target receptacle corresponding to a target stock according to the unique identity information.

From the perspective of storage function, the receptacles 114 include general receptacles and special receptacles. The general receptacle refers to a receptacle that may be used to store any stock, such as a storage box, a finishing box, etc., and the special receptacle refers to a receptacle that is specially used to store a certain kind or category of stocks, such as a shoe box, a fresh food box, a bucket, etc. From the perspective of material, the receptacles include cartons, glass bottles, plastic boxes, metal boxes, leather boxes, etc.

The picking equipment 105 is configured to: receive a target stock in the picking workstation area 101, and transport the target stock from the picking workstation area 101 to the holder storage area 102.

The allocating mechanism 106 is arranged in the holder storage area 102, and configured to: receive the target stock delivered by the picking equipment 105, transport the target stock to a target receptacle corresponding to the target stock on the holder, and deliver the target stock to the target receptacle. The target receptacle may also be an order receptacle.

According to an embodiment of the present disclosure, a bearing surface of the picking equipment 105 and a bearing surface of the allocating mechanism 106 are docked through an inclined slideway, and the inclined slideway is configured to let the target stock slide from the bearing surface of the picking equipment 105 to the bearing surface of the allocating mechanism 106 under gravity.

According to an embodiment of the present disclosure, referring to FIG 11, the picking equipment 105 of the present disclosure includes at least a first movement component 1050 and a first pick-and-place component. The first pick-and-place component is configured to: receive the target stock 118 and deliver the target stock 118 to the allocating mechanism 106. The first pick-and-place component is arranged on the first movement component 1050, and the first movement component 1050 is configured to bring the first pick-and-place component to move.

According to an embodiment of the present disclosure, the first movement component 1050 of the present disclosure may be an AGV vehicle.

The AGV vehicle refers to a transport vehicle that is equipped with an electromagnetic or optical automatic navigation device, can travel along a prescribed navigation path, and has a safety protection function and various transfer functions, such as a handling vehicle that does not require a driver in industrial application, which uses a rechargeable battery as its power source. Generally, the travel path and behavior of the AGV vehicle can be controlled by a computer, or its travel path may be set using an electromagnetic path-following system, and the electromagnetic path-following system is attached to the ground. The unmanned handling vehicle moves according to the information provided by the electromagnetic path-following system, two-dimensional codes on the ground, or simultaneous localization and mapping (SLAM) navigation.

The SLAM is also known as concurrent mapping and localization (CML), real-time positioning and map construction, or concurrent mapping and positioning. The problem may be described as: put a robot at an unknown position in an unknown environment, and is there any way to make the robot gradually draw a consistent map of the environment while moving? The consistent map means that the robot can travel to any accessible position of the room without touching any obstacle.

According to an embodiment of the present disclosure, continuing to refer to FIG 11, the first pick-and-place component of the present disclosure includes a bearing member 1051 and a rotating member 1052, the bearing member 1051 is relatively arranged on the movement component 1050, the rotating member 1052 is rotatably arranged on the bearing member 1051, and the rotating member 1052 has a first position and a second position.

When the rotating member 1052 is at the first position, the rotating member 1052 and the bearing member 1051 abut in the height direction, so that the bearing member 1051 bears the rotating member 1052, and the bearing surface of the bearing member 1051 extends in the horizontal direction to receive the target stock 118.

It can be understood that the bearing surface of the rotating member 1052 extends in the horizontal direction, to ensure the stability of the target stock 118 on the picking equipment 105 when the picking equipment 105 moves between the picking workstation area 101 and the holder storage area 102.

It should be noted that in the picking and allocating system, the target stock 118 is delivered to the picking equipment 105 manually or by an automatic equipment.

When the rotating member 1052 is at the second position, the bearing surface of the rotating member 1052 is inclined at a preset angle relative to the horizontal direction to form the inclined slideway, to enable the target stock on the bearing surface of the picking equipment 105 to slide onto the bearing surface of the allocating mechanism 106 under gravity.

Further, in order to prevent the target stock 118 from falling and being broken during the process of sliding from the inclined slideway onto the bearing surface of the allocating mechanism 106, in this embodiment, both sides of the inclined slideway of the rotating member 1052 of the present disclosure are provided with protective baffles extending in a sliding extension direction of the target stock 118, to prevent the target stock 118 from being displaced in a direction perpendicular to the inclined sliding extension direction, thereby preventing the target stock 118 from falling from the bearing surface of the picking equipment 105.

According to an embodiment of the present disclosure, the bearing surface of the picking equipment 105 of the present disclosure and the bearing surface of the allocating mechanism 106 are docked through a conveyor, the conveyor is configured to transport the target stock from the bearing surface of the picking equipment to the bearing surface of the allocating mechanism, and the conveyor is arranged on the picking equipment 105.

According to some embodiments of the present disclosure, the conveyor of the present disclosure is specifically a belt conveyor. The belt conveyor is an indispensable economical logistics transportation equipment for forming an orderly flow production line. The belt conveyor mainly includes two pulleys at the endpoints and a closed conveying belt tightly sleeved thereon. The pulley that drives the conveying belt to rotate is called the drive pulley (transmission pulley); and the other pulley that only aims at changing the movement direction of the conveying belt is called the bend pulley. The drive pulley is driven by a motor through a reducer, and the conveying belt is dragged by the frictional force between the drive pulley and the conveying belt.

According to some other embodiments of the present disclosure, the conveyor of the present disclosure is specifically a powered roller conveyor. The powered roller conveyor uses a motor to provide power to drive rollers to complete transportation, and it is suitable for transporting various boxes, bags, trays and the like. Bulk cargos, small articles or irregular articles need to be placed on a tray or a turnover box for transportation. The powered roller conveyor mainly includes rollers, legs, a tension brace, a driving device, a speed regulating device, adjusting feet and other components.

In detail, when the picking equipment 105 transports the target stock from the picking workstation area 101 to the holder storage area 102, the bearing surface of the picking equipment 105 and the bearing surface of the allocating mechanism 106 are connected, that is, the bearing surface of the picking equipment 105 and the bearing surface of the allocating mechanism 106 are basically kept in the same plane, and then the conveyor starts to drive the target stock to gradually move towards the bearing surface of the allocating mechanism 106 until the target stock substantially or completely enter the bearing surface of the allocating mechanism 106.

Of course, in order to further ensure that the target stock completely enters the bearing surface of the allocating mechanism 106, the picking equipment 106 may be provided with an auxiliary pushing mechanism, when the conveyor does not play the conveying function on the target stock any more, the auxiliary pushing mechanism can push the target stock completely onto the bearing surface of the allocating mechanism 106.

According to an embodiment of the present disclosure, the allocating mechanism 106 of the present disclosure may also be provided with a conveyor. When the target stock is transported by the conveyor of the picking equipment 105 to partially enter the conveyor on the bearing surface of the allocating mechanism 106, the conveyor on the allocating mechanism 106 further transports the target stock to the center region of the bearing surface of the allocating mechanism 106, to ensure stable placement of the target stock.

Similarly, in order to prevent the target stock from falling from the bearing surface and being damaged when the conveyor transports the target stock, in this embodiment, both sides of the conveyor of the allocating mechanism 106 of the present disclosure are provided with protective baffles extending in the conveying direction, to prevent the displacement of the target stock in a direction perpendicular to the conveying direction, thereby ensuring the safety and reliability of the target stock during the conveying process.

At present, a traditional allocating mechanism in the related art usually includes a frame and a panel turnover mechanism. The panel turnover mechanism is provided with a bearing plate for carrying stocks. The bearing plate has a storage trough for placing stocks. The bearing plate can move in horizontal and vertical directions relative to the frame of the allocating mechanism to reach a position of a target receptacle stored on a rack, and the bearing plate can also rotate in the horizontal plane around a vertical axis relative to the frame, so that when the bearing plate receives a stock at a docking position, the opening of the storage slot for the entry and exit of the stock faces an entrance of a lane between racks at left and right sides of the frame, so that the picking equipment can send the stock into the storage slot on the bearing plate of the allocating mechanism through the opening. When the bearing plate is translated in the horizontal direction or the vertical direction relative to the frame to reach the target receptacle where the stock needs to be placed, the bearing plate rotates 90 degrees horizontally around the vertical axis relative to the frame, so that the opening of the storage slot of the bearing plate turns to above the opening of the target receptacle and align with the opening of the target receptacle, and then the bearing plate is turned over at a preset angle relative to the frame to allow the stock on the bearing plate to slide into the target receptacle under gravity. Then, the above steps are reversed to return the bearing plate of the allocating mechanism to the docking position for the next handling task.

It can be seen that when the above traditional allocating mechanism performs the handling task, the bearing plate needs to rotate at least twice around the vertical axis in the horizontal plane to make the opening of the storage slot docked with the picking equipment at the docking position or docked with the target receptacle at the delivery position.

In contrast, the allocating mechanism of the present disclosure receives or delivers the stock by using the conveyor, which omits the step of carrying the stock to rotate in the handling process, reduces the risk of the stock slipping from the allocating mechanism in the handling process, ensures safety and reliability of the handling process, and simplifies the operation steps of the allocating mechanism.

In addition, both the belt conveyor and the powered roller conveyor are relatively mature mechanical structures with relatively simple structures, the present disclosure uses the structure of the conveyor to achieve the goal of delivering the target good, which reduces the design and manufacturing costs of the allocating mechanism to some extent.

According to an embodiment of the present disclosure, the picking and allocating system of the present disclosure also includes a docking mechanism, and the docking mechanism has a chute. An entrance of the chute is located below the bearing surface of the picking equipment 105, an outlet of the chute is located above the bearing surface of the allocating mechanism 106, and the chute is configured to let the target stock entering the chute slide from the entrance to the exit under gravity. The docking mechanism is arranged on the allocating mechanism 106.

In detail, after the picking equipment 105 transports the target stock to the holder storage area 102, its bearing component puts the target stock into the entrance of the chute through the rotating member or the conveyor, and then the target stock slides along the chute under gravity to leave the exit and slide onto the bearing surface of the allocating mechanism 106.

Continuing to refer to FIG 11, in embodiments of the present disclosure, the picking equipment 105 of the present disclosure also includes an upright 1053. A lower end of the upright 1053 is fixedly arranged on the first movement component 1050, and an upper end of the upright 1053 is fixedly arranged on the bearing member 1051, so that the first pick-and-place components is at a certain height from the ground, making it convenient for the worker to pick and place the stock while standing.

According to an embodiment of the present disclosure, the upright 1053 of the present disclosure may also be configured as a telescopic mechanism, so that it brings the first pick-and-place component to rise and fall relative to the first movement component 1050, so as to adjust its height relative to the worker or the bearing surface of allocating mechanism 106. Of course, the picking and allocating system of the present disclosure can also adjust a relative height position of the bearing surface of the allocating mechanism 106 relative to the bearing surface of the picking equipment 105, to make the bearing surface of the allocating mechanism 106 and the bearing surface of the picking equipment 105 substantially in a horizontal plane facilitate docking. The specific implementation of adjusting the height of the bearing surface of the allocating mechanism 106 will be introduced in detail below.

After the picking equipment 105 delivers the target stock on its bearing surface to the bearing surface of the allocating mechanism 106 through any manner as described in the above embodiments, the allocating mechanism 106 transports the target stock to the target receptacle corresponding to the target stock on the holder 103.

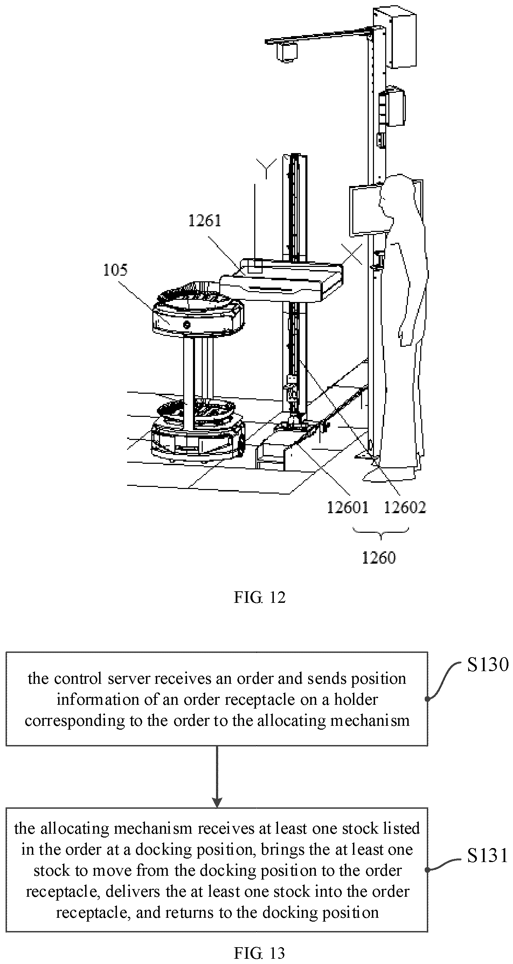

According to an embodiment of the present disclosure, referring to FIG 12, the allocating mechanism of the present disclosure includes a second movement component 1260 and a second pick-and-place component 1261. The second pick-and-place component 1261 has a bearing surface and is configured to deliver the target stock from the bearing surface into the target receptacle. The second pick-and-place component 1261 is arranged on the second movement component 1260, and the second movement component 1260 is configured to bring the second pick-and-place component 1261 to move between the docking position for docking with the picking equipment 105 and the target receptacle.

Continuing to refer to FIG 12, the second movement component of the present disclosure includes a horizontal slide rail 12601 and a vertical slide rail 12602. The vertical slide rail 12602 is arranged on the horizontal slide rail 12601 and configured to slide along the horizontal slide rail 12601. The second pick-and-place component 1261 is arranged on the vertical slide rail 12602 and has a bearing surface, and is configured to slide along the vertical slide rail 12601.

According to positions of coordinates (horizontal coordinate + vertical coordinate) of the target receptacle corresponding to the target stock on the holder, the vertical slide rail 12602 of the allocating mechanism first brings the second pick-and-place component 1261 to slide along the horizontal slide rail 12601 to the horizontal coordinate position of the target receptacle, and then the second pick-and-place component 61 brings the target stock thereon to slide along the vertical slide rail 12602 to the vertical coordinate position of the target receptacle, to make the bearing surface of the allocating mechanism 106 above the opening of the target receptacle or substantially flush with the opening of the target receptacle, and then the target stock is delivered into the target receptacle.

As described above with respect to the manners of adjusting the relative height distance between the bearing surface of the picking equipment 105 and the bearing surface of the allocating mechanism 106, based on the structure of the allocating mechanism 106 in this embodiment, when the picking equipment 105 moves from the picking workstation area 101 to the docking position, the allocating mechanism 6 can control the vertical slide rail 12602 to slide a certain distance along the horizontal slide rail 12601 and control the second pick-and-place component 1261 to slide a certain distance along the vertical slide rail 12602 to make the bearing surface of the allocating mechanism 106 substantially in the same horizontal plane as the bearing surface of the picking equipment 105

According to another embodiment of the present disclosure, the second movement component of the present disclosure may be an AGV vehicle or a mechanical arm, and the second pick-and-place component is arranged at the end of the mechanical arm.

According to an embodiment of the present disclosure, the second pick-and-place component 1261 of the allocating mechanism 106 of the present disclosure is provided with a conveyor thereon, and the conveyor is configured to convey the target stock on the bearing surface from the current position towards the target receptacle, until the target stock falls into the target receptacle.

It should be noted that the specific structure of the second pick-and-place component 1261 may be similar to that of the first pick-and-place component, that is, the second pick-and-place component 1261 may also include an bearing member and a rotating member, and the rotating member is provided with a bearing surface and also has two positions. At the first position, the bearing surface of the rotating member of the second pick-and-place component 1261 extends in the horizontal direction to receive the target stock; and at the second position, the bearing surface of the rotating member of the second pick-and-place component 1261 is inclined at a preset angle relative to the horizontal direction, so that the target stock can be delivered from the bearing surface into the target receptacle under gravity.

Similarly, in order to prevent the target stock from falling and being broken when sliding from the bearing surface of the allocating mechanism 106 into the target receptacle, in embodiments of the present disclosure, both sides of the bearing surface of the rotating member of the present disclosure are provided with protective baffles extending in sliding extension direction, to prevent the target stock from falling from the bearing surface of the allocating mechanism 106.

It should be noted that in the picking workstation area 101, the target stock may be delivered to the bearing surface of the picking equipment 105 manually or by an automatic equipment. The destination may be transferred to the picking equipment 105 manually. Similarly, the coordinate positions of the target receptacle corresponding to the target stock on the holder may also be delivered manually to the allocating mechanism 106. It is understandable that such operation manner is feasible for small amount of sorting tasks, however, for large amount of sorting tasks, such operation manner will require huge labor costs, and the problem of manual misoperation will be serious.

As mentioned above, the holder 103 of the present disclosure has two layers of storage space arranged at intervals in the height direction, and each layer of storage space has at least one storage location. It can be understood that those skilled in the art can set any number of storage space in the height direction and set any number of storage locations on each layer of storage space according to the specific structure of the holder 103.

In order to improve the sorting efficiency, the allocating mechanism 106 of the present disclosure includes a plurality of second pick-and-place components 1261, and the plurality of second pick-and-place components 1261 are arranged at intervals in the height direction, that is, the plurality of second pick-and-place components 1261 are arranged on the vertical slide rail 12602 in sequence in the height direction, and the interval between two adjacent second pick-and-place components 1261 can meet the requirements of taking out the target stock from two adjacent receptacles respectively or placing the target stock into two adjacent receptacles.

Of course, each second pick-and-place component 1261 may be configured with an independent height adjustment mechanism on the vertical slide rail 12602, so as to adjust the relative heights between the plurality of second pick-and-place components 1261 according to the actual scenario, so that a plurality of target receptacles can be put into their respective target receptacles at the same time to improve sorting efficiency.

To this end, according to an embodiment of the present disclosure, the picking and allocating system of the present disclosure further includes an identification device and a control server. The identification device is configured to recognize identity information of the target stock, and the control server is communicatively connected with the identification device, the picking equipment and the allocating mechanism, and configured to: determine a transportation destination of the picking equipment and the position information of the target receptacle on the holder corresponding to the target stock according to the identity information of the target stock, and transmit the destination and the position information to the picking equipment and the allocating mechanism respectively.

The control server is communicatively connected with the identification device, the picking equipment and the allocating mechanism in a wired or wireless manner. The worker operates the control server through an operating console. The control server is a software system that runs on a server, has data storage and information processing capabilities, and can be wirelessly connected with a software system of an execution device. The control server may include one or more servers, and may have a centralized control architecture or a distributed computing architecture. The control server has a processor and a memory, the memory may have a database, and the database has stored therein a correspondence between target stocks and target receptacles.

Continuing to refer to FIG 10, the picking and allocating system of the present disclosure also includes a main passage 107. The main passage 107 is configured to connect the picking workstation area 101 and the holder storage area 102, and the main passage 107 is evenly divided into several square grids with corresponding position information set in each square grid. Optionally, the position information may be drawn or pasted in the square grid in the form of two-dimensional code.

The picking equipment 105 is configured to identify the position information of the square grid to determine whether the transportation destination is reached. That is, the picking equipment stops after moving from the workstation area to the transportation destination according to the position information in the square grids. For example, the transportation destination is a docking place at which the holder 103 where the target receptacle corresponding to the target stock is located is docked with the main passage 107 or may be an entrance of a lane between two adjacent holders 103.

As mentioned above, the picking and allocating system of the present disclosure is particularly suitable for sorting tasks with a relatively large amount of target stocks. To this end, the holder storage areas 102 are arranged at both sides of the main passage 107 of the picking and allocating system of the present disclosure, and in each holder storage area 102, a plurality of holders 103 are arranged at intervals in an extension direction of the main passage 107. An area between two adjacent holders 103 is recorded as a lane, and the allocating mechanism 106 is provided in the lane.

It can be understood that the allocating mechanism 106 may be provided in each lane, so that it can be used in cooperation with any of the two adjacent holders 103.

In order to reduce the configuration cost of the picking and allocating system, continuing to refer to FIG 10, in embodiments of the present disclosure, each allocating mechanism 106 of the present disclosure is configured to: put target stocks into target receptacles on two adjacent holders 103, or take out target stocks from target receptacles on two adjacent holders 103. That is to say, the first handling mechanism 106 can be used in cooperation with two holders.

Continuing to refer to FIG 10, in embodiments of the present disclosure, the picking workstation areas 101 are arranged at both ends of the main passage 107 of the present disclosure, and the two picking workstation areas 101 are configured to perform the same work or perform different works.

For example, the two picking workstation areas 101 can both perform the sorting work. That is, the picking equipment 105 takes respective target stocks from the two picking workstation areas 101 at the same time, and sends them to different destinations respectively, thereby improving the sorting efficiency.

Of course, one of the two picking workstation areas 101 performs the sorting work, and the other one performs the follow-up work after the sorting work. That is, the picking equipment 105 takes the target stock from one picking workstation area 101 and transports the target stock to the destination, and then the allocating mechanism 106 delivers the target stock into the target receptacle on the holder 103. When it is time to enter the next process after the sorting work, the picking equipment 105 transports the target stock from the holder storage area to another picking workstation area 101, thereby expanding the working mode of the picking and allocating system.

At this point, one working mode of the picking and allocating system of the present disclosure ends, that is, the picking equipment 105 and the allocating mechanism 106 are used to transport the target stock in the picking workstation area 101 to the corresponding target receptacle, and deliver the target stock into the target receptacle, to complete a sorting task.

In order to expand the working modes of the picking and allocating system, the picking and allocating system is further configured to have a second working mode, which may also be called reverse operations of the first working mode, that is, the target stock in the holder storage area 102 is transported to the picking workstation area 101, and delivered to the target storage location. The target storage location may be located at a receptacle, a tray, a holder or a conveyor. The conveyor may be docked with subsequent work station.

In detail, the picking equipment 105 is also configured to: receive the target stock delivered by the allocating mechanism 106, transport the target stock to the workstation area 1, and deliver the target stock to the target storage location in the picking workstation area 101.

It should be noted that in the holder storage area, the target stock may be delivered onto the allocating mechanism 106 manually or by an automatic equipment, and then the allocating mechanism 106 deliver the target stock to the picking equipment 105.

In addition to the above picking and allocating system, the present disclosure also provides a method for controlling the picking and allocating system.

### Embodiment 1

According to an embodiment of the present disclosure, the picking and allocating system of the present disclosure includes a holder parking area, an allocating mechanism and a control server. The allocating mechanism is arranged in the holder parking area, and the control server is communicatively connected with the allocating mechanism.

It should be noted that the setting method, the specific mechanism and working principle of each component of the holder parking area of the picking and allocating system are the same as the relevant contents described hereinbefore, which can be completely implemented by those skilled in the art based on the contents described hereinbefore, and thus will not be elaborated here.

Referring to FIG 13, in this embodiment, the control method of the present disclosure includes the following steps.

In S130, the control server receives an order and sends position information of an order receptacle on a holder corresponding to the order to the allocating mechanism.

In S 131, the allocating mechanism receives at least one stock listed in the order at a docking position, brings the at least one stock to move from the docking position to the order receptacle, delivers the at least one stock into the order receptacle, and returns to the docking position.

It can be seen that compared with the existing picking and allocating tasks operated manually completely, the picking and allocating system of the present disclosure uses the allocating mechanism to automatically complete the allocating task, which improves the efficiency of the picking and allocating operations and reduces the operation error rate.

The control method of the above Embodiment 1 mainly controls the picking and allocating system to automatically complete the allocating task. In order to expand its application scope, a method for controlling the picking and allocating system which can simultaneously perform the picking and allocating tasks is also provided in the present disclosure according to Embodiment 2 and Embodiment 3 of the control method of the present disclosure.

### Embodiment 2

A difference between Embodiment 2 and Embodiment 1 is that in Embodiment 2, the picking and allocating system of the present disclosure is additionally provided with a picking workstation area and a picking equipment, and the control server is communicatively connected with the picking equipment.

Similarly, it should be noted that the division method of the picking workstation area, the specific mechanism of the picking equipment and its working principle in this embodiment are the same as the relevant contents described hereinbefore, which can be completely implemented by those skilled in the art based on the contents described hereinbefore, and thus will not be elaborated here.

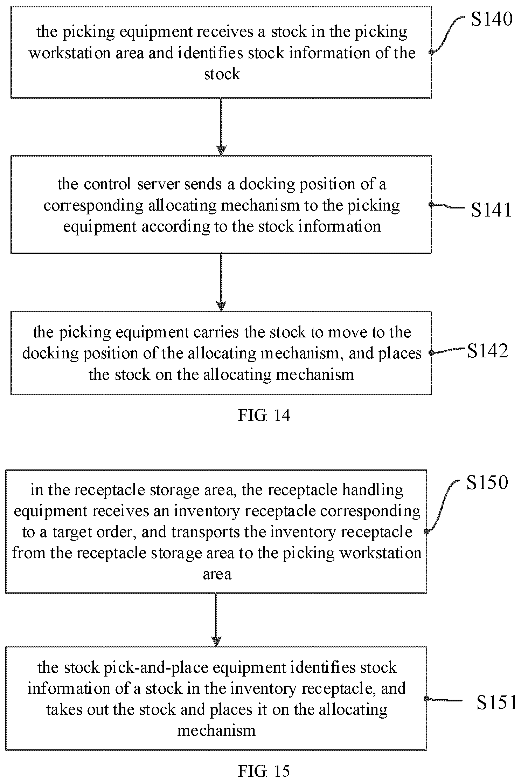

Referring to FIG 14, before the step S131, the method for controlling the picking and allocating system in Embodiment 2 further includes the following steps.

In S140, the picking equipment receives a stock in the picking workstation area and identifies stock information of the stock.

In S141, the control server sends a docking position of a corresponding allocating mechanism to the picking equipment according to the stock information.

In S142, the picking equipment carries the stock to move to the docking position of the allocating mechanism, and places the stock on the allocating mechanism.

After the step S142, the steps S130 and S131 as described in Embodiment 1 are performed.

According to another embodiment of the present disclosure, the steps S140 to S142 may also be performed after the step S130 and before the step S131, in other words, as long as the stock has reached the docking position of the allocating mechanism before the step S131, so that the allocating mechanism can receive the stock.

Therefore, the control method according to Embodiment 2 controls the picking and allocating system to automatically complete both the picking task and the allocating task, which further improves the efficiency of the picking and allocating operations and reduces the misoperation rate caused by manual participation.

### Embodiment 3

A difference between Embodiment 3 and Embodiment 1 is that in Embodiment 3, the picking and allocating system of the present disclosure is additionally provided with a receptacle storage area, a picking workstation area, a receptacle handling equipment and a stock pick-and-place equipment. The stock pick-and-place equipment is arranged between the picking workstation area and the holder parking area, and the control server is also communicatively connected with both the receptacle handling equipment and the stock pick-and-place equipment.

Similarly, it should be noted that the division method of the receptacle storage area and the picking workstation area, as well as the specific mechanisms and working principles of the receptacle handling equipment and the stock pick-and-place equipment in this embodiment are the same as the relevant contents described hereinbefore, which can be completely implemented by those skilled in the art based on the contents described hereinbefore, and thus will not be elaborated here.

Referring to FIG 15, before the step S131, the method for controlling the picking and allocating system in Embodiment 3 further includes the following steps.

In S150, in the receptacle storage area, the receptacle handling equipment receives an inventory receptacle corresponding to a target order, and transports the inventory receptacle from the receptacle storage area to the picking workstation area.

In S151, the stock pick-and-place equipment identifies stock information of a stock in the inventory receptacle, and takes out the stock and places it on the allocating mechanism.

After the step S151, the steps S130 and S131 as described in Embodiment 1 are performed.

According to another embodiment of the present disclosure, the steps S150 to S151 may also be performed after the step S130 and before the step S131, in other words, as long as the stock has reached the docking position of the allocating mechanism before the step S131, so that the allocating mechanism can receive the stock.

Therefore, the control method according to Embodiment 3 controls the picking and allocating system to automatically complete both the picking task and the allocating task, which further improves the efficiency of the picking and allocating operations and reduces the misoperation rate caused by manual participation.

### Embodiment 4

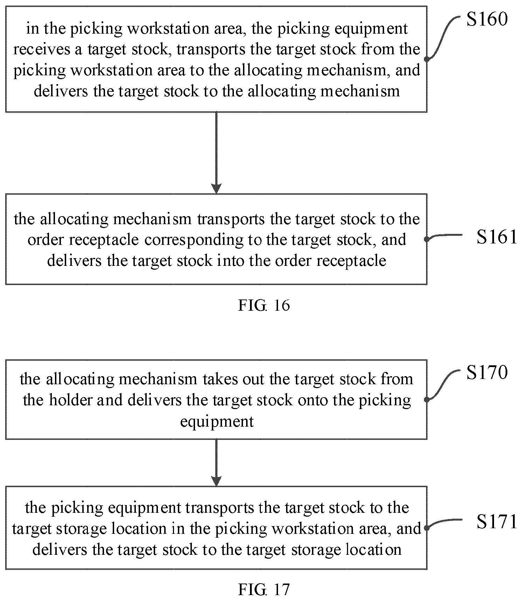

Referring to FIG 16, according to an embodiment of the present disclosure, the method for controlling the picking and allocating system of the present disclosure mainly includes the following steps.

In S 160, in the picking workstation area, the picking equipment receives a target stock, transports the target stock from the picking workstation area to the allocating mechanism, and delivers the target stock to the allocating mechanism.

It should be noted that in the picking workstation area, the target stock is delivered onto the bearing surface of the picking equipment manually or by other automatic equipment. Before delivery, the identity information of the target stock is confirmed by an identification device, such as a scanner, and the identity information is sent to the control server. The control server retrieves a target receptacle corresponding to the target stock from the database according to the identity information, the information of the target receptacle displays a serial number of a holder where the target receptacle is located and position coordinates of the target receptacle on the holder, such as a coordinate position in the horizontal direction and a coordinate position in the vertical direction, and control server sends the coordinate positions to the allocating mechanism.

In S161, the allocating mechanism transports the target stock to the order receptacle corresponding to the target stock, and delivers the target stock into the order receptacle. It should be noted that the order receptacle may also be called the target receptacle.

The control service sends the coordinate positions of the target receptacle corresponding to the target stock to the allocating mechanism. According to the coordinate positions, the allocating mechanism drives the vertical slide rail to move from a current position to the horizontal coordinate position of the target receptacle along the horizontal slide rail, and then the vertical slide rail drives the second pick-and-place component to slide from a current position to the vertical coordinate position of the target receptacle along the vertical slide rail. At this time, the allocating mechanism delivers the target stock into the target receptacle. At this point, the sorting task is completed once, and the allocating mechanism returns to the initial position and waits for the next sorting task.

It should be noted that the initial position of the allocating mechanism refers to a position where the allocating mechanism is docked with the picking equipment. The initial position is a fixed position, so that the transportation destination of the picking equipment is relatively fixed. That is, when the picking equipment transports the target stock from the picking workstation area to the holder storage area, the transportation destination is fixed, and the picking equipment does not need to re-determine the transportation destination according to each sorting task. It can be understood that the fixed initial position described here refers to a docking position for docking with one allocating mechanism in a plurality of sorting tasks, or a position of an entrance of a lane where the allocating mechanism is located.

According to another embodiment of the present disclosure, referring to FIG 17, the control method of the present disclosure further includes the following steps.

In S170, the allocating mechanism takes out the target stock from the holder and delivers the target stock onto the picking equipment.

It should be noted that the second pick-and-place component of the allocating mechanism can take out the target stock from the target receptacle by attracting, grabbing, clamping, hooking, picking up the target stock or by other manner. Before taking out the target stock, the identity information of the target stock is identified by an identification device, such as a scanner, and the identity information is sent to the control server, and the control server retrieves information of the target storage location on the picking workstation area corresponding to the target stock from the database according to the identity information and sends the information of the target storage location to the picking equipment, so that the picking equipment takes this information as the destination of its movement.

After taking out the target stock from the target receptacle, the second pick-and-place component of the allocating mechanism slides a corresponding vertical distance along the vertical slide rail, and is driven by the vertical slide rail to slide a corresponding horizontal distance along the horizontal slide rail to finally reach its initial position according to a relative distance between a current position and its initial position, and then delivers the target stock to the picking equipment.

In S171, the picking equipment transports the target stock to the target storage location in the picking workstation area, and delivers the target stock to the target storage location.

After the picking equipment receives the target stock delivered by the allocating mechanism, the picking equipment moves to the target storage location in the picking workstation area according to the information of the target storage location sent by the control server. The target storage location may be set on the operation platform, the conveyor, the holder or any other appliance that can place the stock.

It can be seen that the picking and allocating system of the present disclosure can not only transport the target stock from the picking workstation area to the holder storage area to complete the sorting task, but also can take out the sorted target stock and transport it to the picking workstation area again to proceed to the next process.

Of course, additionally, the method for controlling the picking and allocating system of the present disclosure has all the technical effects of the above-mentioned picking and allocating system, which can be fully understand by those skilled in the art based on the foregoing descriptions, and thus will not be elaborated here.

Finally, it should be noted that the above-mentioned embodiments are only specific implementations of the present disclosure for illustrating the technical solutions of the present disclosure, and not intended to limit the present disclosure, and the protection scope of the present disclosure is not limited thereto. Although the present disclosure is described in detail with reference to the foregoing embodiments, those of ordinary skill in the art should understand that any person familiar with this technical field can still modify the technical solutions recorded in the foregoing embodiments, or can easily think of changes, or make equivalent substitutions to some of the technical features within the technical scope disclosed in the present disclosure; and these modifications, changes or substitutions do not cause the essence of the corresponding technical solutions to deviate from the spirit and scope of the technical solutions of embodiments of the present disclosure, and shall be included in the protection scope of the present disclosure. Therefore, the protection scope of the present disclosure should be determined by the protection scope of the claims.

## Claims

1. A picking and allocating system, comprising:
a holder parking area, configured for parking a holder, the holder being configured for storing order receptacles;
an allocating mechanism, arranged in the holder parking area, and configured to: receive at least one stock listed in a same order, bring the at least one stock to move from a docking position to an order receptacle corresponding to the order, allocate the at least one stock to the order receptacle, and return to the docking position; and
a control server, communicatively connected with the allocating mechanism, and configured to: obtain position information of the order receptacle on the holder according to the order, and send the position information to the allocating mechanism.

2. The picking and allocating system according to claim 1, wherein the control server is further configured to send a picking instruction, the picking instruction comprises picking out a total number of same stocks listed in a plurality of orders, and placing the stocks of the plurality of orders on the allocating mechanism in batches, respectively, to allow the allocating mechanism to implement delivery until all of the plurality of orders are completed.

3. The picking and allocating system according to claim 1, wherein the control server is further configured to send a picking instruction, and the picking instruction comprises picking out all stocks comprised in an order and placing all the stocks on the allocating mechanism;
wherein all the stocks are of a same type or of different types.

4. The picking and allocating system according to any one of claims 1 to 3, further comprising:
a picking workstation area; and
a picking equipment, configured to: receive a stock in the picking workstation area and identify stock information of the stock, move to a docking position of a corresponding allocating mechanism according to the stock information, and place the stock on the corresponding allocating mechanism;
wherein the control server is communicatively connected with the picking equipment, and further configured to send the docking position of the corresponding allocating mechanism to the picking equipment according to the stock information.

5. The picking and allocating system according to claim 4, wherein the holder comprises at least two layers of storage space extending in a height direction, each layer of storage space has at least one storage location, and each storage location is configured to store a receptacle.

6. The picking and allocating system according to claim 5, wherein the allocating mechanism is further configured to: take out a target stock from the order receptacle and deliver the target stock to the picking equipment; and
the picking equipment is further configured to: transport the target stock from the holder storage area to the picking workstation area, and deliver the target stock to a target storage location corresponding to the target stock.

7. The picking and allocating system according to claim 6, wherein a bearing surface of the picking equipment and a bearing surface of the allocating mechanism are docked through an inclined slideway, and the inclined slideway is configured to let the target stock slide from the bearing surface of the picking equipment to the bearing surface of the allocating mechanism under gravity.

8. The picking and allocating system according to claim 3, wherein the picking equipment has a first pick-and-place component, the first pick-and-place component comprises a bearing member and a rotating member rotatably arranged on the bearing member, and the rotating member has a first position and a second position;
at the first position, the bearing member bears the rotating member, and a bearing surface of the rotating member extends in a horizontal direction;
at the second position, the bearing surface of the rotating member is inclined at a preset angle relative to the horizontal direction to form an inclined slideway.

9. The picking and allocating system according to claim 5, wherein a bearing surface of the picking equipment and a bearing surface of the allocating mechanism are docked by a conveyor, and the conveyor is configured to transport a target stock from the bearing surface of the picking equipment to the bearing surface of the allocating mechanism.

10. The picking and allocating system according to claim 9, wherein both sides of the conveyor are provided with protective baffles extending along a conveying direction.

11. The picking and allocating system according to claim 8, wherein the picking equipment further comprises a first movement component, the first pick-and-place component is arranged on the first movement component, and the first movement component is configured to bring the first pick-and-place component to move.

12. The picking and allocating system according to claim 5, wherein the allocating mechanism comprises:
a second pick-and-place component, having a bearing surface and configured to: deliver a target stock from the bearing surface into the order receptacle, or deliver the target stock from the bearing surface to a bearing surface of the picking equipment; and
a second movement component, wherein the second pick-and-place component is arranged on the second movement component, and the second movement component is configured to bring the second pick-and-place component to move between a docking position for docking with the picking equipment and the order receptacle.

13. The picking and allocating system according to claim 12, wherein the second movement component comprises:
a horizontal slide rail; and
a vertical slide rail, arranged on the horizontal slide rail and configured to slide along the horizontal slide rail,
wherein the second pick-and-place component is arranged on the vertical slide rail and configured to slide along the vertical slide rail.

14. The picking and allocating system according to claim 13, wherein the allocating mechanism comprises a plurality of second pick-and-place components arranged at intervals in a height direction.

15. The picking and allocating system according to claim 4, further comprising a main passage configured to connect the picking workstation area and the holder storage area, wherein the main passage is evenly divided into a plurality of square grids with corresponding position information set in each square grid; and the picking equipment determines a destination based on the position information.

16. The picking and allocating system according to claim 15, wherein picking workstation areas are arranged at both ends of the main passage, and the two picking workstation areas are configured to perform the same work or different works.

17. The picking and allocating system according to claim 15, wherein holder storage areas are arranged at both sides of the main passage.

18. The picking and allocating system according to claim 15, wherein in the holder storage area, a plurality of holders are arranged at intervals in an extension direction of the main passage, and an area between two adjacent holders is recorded as a lane, and the allocating mechanism is arranged in the lane.

19. The picking and allocating system according to claim 18, wherein the picking equipment is further configured to: put target stocks into target receptacles on two adjacent holders, or take out target stocks from target receptacles on two adjacent holders.

20. The picking and allocating system according to claim 15, further comprising:
an identification device, configured to recognize identity information of a target stock;
wherein the control server is communicatively connected with the identification device, and determines a target receptacle or a target storage location corresponding to the target stock according to the identity information of the target stock.

21. The picking and allocating system according to any one of claims 1 to 3, further comprising:
a receptacle storage area, configured to store inventory receptacles for storing stocks to be sorted;
a picking workstation area;
a receptacle handling equipment, configured to transport an inventory receptacle from the receptacle storage area to the picking workstation area; and
a stock pick-and-place equipment, arranged between the picking workstation area and the holder parking area, and configured to: take out a stock in the inventory receptacle and place the stock on the allocating mechanism, and identify stock information of the stock;
wherein the control server is also communicatively connected with both the receptacle handling equipment and the stock pick-and-place equipment, and is further configured to obtain position information of an order receptacle according to the stock information and order information corresponding to the stock information.

22. The picking and allocating system according to claim 21, wherein the receptacle handling equipment is configured to: transport one or more inventory receptacles required for a plurality of orders from the receptacle storage area to the picking workstation area according to order information of the plurality of orders, or transport one or more inventory receptacles from the picking workstation area to the receptacle storage area after sorting is completed.

23. The picking and allocating system according to any one of claims 1 to 3, further comprising:
a receptacle storage area, configured to store inventory receptacles for storing stocks to be sorted;
a picking workstation area;
a receptacle handling equipment, configured to transport an inventory receptacle from the receptacle storage area to the picking workstation area; and
an identification device configured to identify stock information of a stock in the inventory receptacle;
wherein the control server is also communicatively connected with both the receptacle handling equipment and the identification device, and further configured to obtain position information of an order receptacle according to the stock information and order information corresponding to the stock information.

24. The picking and allocating system according to claim 23, wherein the receptacle handling equipment is configured to: transport one or more inventory receptacles required for a plurality of orders from the receptacle storage area to the picking workstation area according to order information of the plurality of orders, or transport one or more inventory receptacles from the picking workstation area to the receptacle storage area after sorting is completed.

25. The picking and allocating system according to any one of claims 1 to 3, further comprising:
a picking workstation area; and
a stock pick-and-place equipment, arranged between the picking workstation area and the holder parking area, and configured to: take out a stock listed in an order from the picking workstation area and place the stock on the allocating mechanism, and identify stock information of the stock;
wherein the control server is also communicatively connected with the stock pick-and-place equipment, and further configured to obtain position information of an order receptacle according to the stock information and order information corresponding to the stock information.

26. The picking and allocating system according to any one of claims 1 to 3, further comprising:
a picking workstation area;
a stock storage area, configured to store stocks to be sorted;
a stock handling equipment, configured to move to a storage position of a stock listed in an order in the stock storage area according to order information, receive the stock, and transport the stock to the picking workstation area; and
an identification device, configured to identify stock information of the stock;
wherein the control server is also communicatively connected with both the stock handling equipment and the identification device, and further configured to obtain position information of an order receptacle according to the stock information and order information corresponding to the stock information.

27. The picking and allocating system according to claim 26, wherein the stock handling equipment comprises:
a handling vehicle;
a bracket, arranged on the handling vehicle, and the handling vehicle being configured to bring the bracket to move between a stock inventory area and the picking workstation area; and
at least one tray, arranged on the bracket, and configured to bear stocks.

28. The picking and allocating system according to any one of claims 1 to 3, further comprising:
a handling base, configured to support holders or order receptacles, and having space for a handling vehicle to enter from the ground;
a handling vehicle, configured to: lift the handling base carrying a holder or an order receptacle off the ground after allocation is completed and transport the handling base from the holder parking area to a workstation area downstream, or transport the handling base carrying an empty holder or order receptacle from an inventory area to the holder parking area.

29. The picking and allocating system according to claim 28, wherein the control server is communicatively connected with the handling vehicle, and configured to: control the handling vehicle to transport the handling base carrying the empty holder or order receptacle to the holder parking area when receiving an order, or control the handling vehicle to transport the handling base carrying the holder or the order receptacle for which allocation is completed to the workstation area downstream after an order is completed.

30. The picking and allocating system according to any one of claims 1 to 3, wherein the allocating mechanism comprises:
a gantry, arranged in the holder parking area; and
a movement component, provided with a docking component, and configured to bring the docking component to move between the docking position and the order receptacle;
wherein the docking component is configured to receive a stock or place a stock into the order receptacle.

31. The picking and allocating system according to claim 30, wherein the movement component comprises:
a horizontal slide rail, arranged on the gantry, and configured to bring the docking component to move in a horizontal direction relative to the gantry; and/or
a vertical slide rail, arranged on the gantry, and configured to bring the docking component to move in a vertical direction relative to the gantry.

32. The picking and allocating system according to claim 31, wherein the horizontal slide rail comprises:
a horizontal linear rail, arranged on the gantry and extending in the horizontal direction;
a horizontal sliding block, slidably connected to the horizontal linear rail; and
a horizontal driving element, configured to drive the horizontal sliding block to slide on the horizontal linear rail in the horizontal direction.

33. The picking and allocating system according to claim 32, wherein the vertical slide rail comprises:
a vertical linear rail, arranged on the horizontal sliding block and extending in the vertical direction;
a vertical sliding block, slidably connected to the vertical linear rail; and
a vertical driving element, configured to drive the vertical sliding block to slide on the vertical linear rail in a preset direction,
wherein the docking component is arranged on the vertical sliding block.

34. The picking and allocating system according to claim 32, wherein the movement component comprises an upper horizontal slide rail and a lower horizontal slide rail arranged in parallel, an upper end of the vertical linear rail is arranged on a horizontal sliding block of the upper horizontal slide rail, and a lower end of the vertical linear rail is arranged on a horizontal sliding block of the lower horizontal slide rail.

35. The picking and allocating system according to claim 30, wherein the docking component comprises:
a bracket, arranged on the movement component, and configured to reciprocate between the docking position and the order receptacle with the movement component;
a conveying belt, rotatably arranged on the bracket; and
a conveying drive element, configured to drive the conveying belt to rotate relative to the bracket to bring a stock to a middle part of the conveying belt or allocate a tock on the conveying belt into the order receptacle.

36. A method for controlling a picking and allocating system, wherein the picking and allocating system comprises:
a holder parking area;
an allocating mechanism, arranged in the holder parking area; and
a control server, communicatively connected with the allocating mechanism,
wherein the method comprises:
the control server receiving an order, and sending position information of an order receptacle on a holder corresponding to the order to the allocating mechanism; and
the allocating mechanism receiving at least one stock listed in the order at a docking position, bringing the at least one stock to move from the docking position to the order receptacle and delivering the at least one stock to the order receptacle, and returning to the docking position.

37. The method for controlling the picking and allocating system according to claim 36, wherein the picking and allocating system further comprises a picking workstation area and a picking equipment; and the control server is communicatively connected with the picking equipment;
before the allocating mechanism receiving the at least one stock listed in the order at the docking position, bringing the at least one stock to move from the docking position to the order receptacle and delivering the at least one stock to the order receptacle, and returning to the docking position, the method further comprises:
the picking equipment receiving the at least one stock at the picking workstation area and identifying stock information of the at least one stock;
the control server sending a docking position of a corresponding allocating mechanism to the picking equipment according to the stock information; and
the picking equipment carrying the at least one stock to move to the docking position of the allocating mechanism, and placing the at least one stock on the allocating mechanism.

38. The method for controlling the picking and allocating system according to claim 37, further comprising:
the allocating mechanism taking out a target stock from the holder and delivering the target stock onto the picking equipment; and
the picking equipment transporting the target stock to a target storage location in the picking workstation area, and delivering the target stock to the target storage location.

39. The method for controlling the picking and allocating system according to claim 36, wherein the picking and allocating system further comprises a receptacle storage area, a picking workstation area, a receptacle handling equipment, and a stock pick-and-place equipment;
wherein the stock pick-and-place equipment is arranged between the picking workstation area and the holder parking area, and the control server is also communicatively connected with both the receptacle handling equipment and the stock pick-and-place equipment;
wherein before the allocating mechanism receiving the at least one stock listed in the order at the docking position, bringing the at least one stock to move from the docking position to the order receptacle and delivering the at least one stock to the order receptacle, and returning to the docking position, the method further comprises:
in the receptacle storage area, the receptacle handling equipment receiving an inventory receptacle corresponding to the order, and transporting the inventory receptacle from the receptacle storage area to the picking workstation area; and
the stock pick-and-place equipment identifying stock information of a stock in the inventory receptacle, taking out the stock from the inventory receptacle and placing the stock on the allocating mechanism.
